(19) Europäisches Patentamt
European Patent Office
Office européen des brevets

(11) **EP 4 661 531 A1**

(12) **EUROPEAN PATENT APPLICATION**
published in accordance with Art. 153(4) EPC

(43) Date of publication:
**10.12.2025 Bulletin 2025/50**

(21) Application number: **24757049.2**

(22) Date of filing: **19.01.2024**

(51) International Patent Classification (IPC):
*H04W 64/00* (2009.01)     *H04W 24/08* (2009.01)
*G01S 5/04* (2006.01)     *G01S 3/14* (2006.01)
*G01S 5/02* (2010.01)

(52) Cooperative Patent Classification (CPC):
G01S 3/14; G01S 5/02; G01S 5/04; H04W 24/08;
H04W 64/00

(86) International application number:
**PCT/KR2024/000996**

(87) International publication number:
**WO 2024/172318 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.02.2023 KR 20230020390
10.03.2023 KR 20230032111**

(71) Applicant: Samsung Electronics Co., Ltd.
**Suwon-si, Gyeonggi-do 16677 (KR)**

(72) Inventors:
• **KANG, Jinwhan**
  **Suwon-si Gyeonggi-do 16677 (KR)**
• **BAE, Youngtaek**
  **Suwon-si Gyeonggi-do 16677 (KR)**
• **OK, Kyusoon**
  **Suwon-si Gyeonggi-do 16677 (KR)**
• **YUN, Yusuk**
  **Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **ELECTRONIC DEVICE AND METHOD FOR PROVIDING ANGLE OF ARRIVAL IN WIRELESS COMMUNICATION SYSTEM**

(57)     In embodiments, a device of a base station may be provided. The device may include a memory for storing instructions, at least one transceiver, and at least one processor. When executed by the at least one processor, the instructions may cause the device to: acquire signals received from a terminal via a plurality of antennas; acquire first angles of arrival (AoAs) of the plurality of antennas with respect to a first direction on the basis of the signals; and transmit a measurement message including the first AoAs and at least one first candidate AoA related to the first AoAs to a location management server via the at least one transceiver. The at least one first candidate AoA may be identified on the basis of the first AoAs and a first interval between the antennas arranged along the first direction.

FIG. 6

**Description**

**[Technical Field]**

The following descriptions relate to an electronic device and a method for providing an angle of arrival in a wireless communication system.

**[Background Art]**

In a wireless communication environment, user equipment (UE) may move. Wireless signals may be used to obtain a location of the moving UE. A network node may measure an angle at which a wireless signal arrives (hereinafter, an angle of arrival) through multiple antennas. Based on an angle of arrival of a wireless signal of the UE, the location of the UE may be obtained.

The above-described information may be provided as a related art for the purpose of helping understanding of the present disclosure. No argument or decision is made as to whether any of the above description may be applied as a prior art related to the present disclosure.

**[Disclosure]**

**[Technical Solution]**

In embodiments, an apparatus of a base station is provided. The apparatus may include at least one transceiver and at least one processor. The at least one processor may be configured to obtain signals received from a terminal through a plurality of antennas. The at least one processor may be configured to obtain a first angle of arrival (AoA) for a first direction of the plurality of antennas based on the signals. The at least one processor may be configured to transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

In embodiments, a method performed by an apparatus of a base station is provided. The method may include obtaining signals received through a plurality of antennas. The method may include obtaining a first angle of arrival (AoA) for a first direction of the plurality of antennas based on the signals. The method may include transmitting, to a location management server, a measurement message including the first AoA and at least one first candidate AoA associated with the first AoA. In the method, the at least one first candidate AoA may be identified based on the first AoA and a first interval between antennas disposed along the first direction.

In embodiments, an apparatus of a base station may be provided. The apparatus may include memory storing instructions, at least one transceiver, and at least one processor. The instructions, when executed by the at least one processor, may cause the apparatus to obtain signals received from a terminal through a plurality of antennas, obtain a first angle of arrival (AoA) for a first direction of the plurality of antennas based on the signals, and transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

In embodiments, a digital unit (DU) may be provided. The DU may include memory storing instructions, at least one transceiver, and at least one processor. The instructions, when executed by the at least one processor, may cause the DU to obtain signals received from a terminal through a plurality of antennas of a radio unit (RU), obtain a first angle of arrival (AoA) for a first direction of the plurality of antennas based on the signals, and transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

In embodiments, a radio unit (RU) may be provided. The RU may include memory storing instructions, at least one transceiver, and at least one processor. The instructions, when executed by the at least one processor, may cause the RU to obtain signals received from a terminal through a plurality of antennas, obtain a first angle of arrival (AoA) for a first direction of the plurality of antennas based on the signals, and transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

In embodiments, a non-transitory computer readable storage medium is provided. The non-transitory computer readable storage medium, when executed by a processor of an apparatus, may cause the apparatus to obtain signals received from a terminal through a plurality of antennas, obtain a first angle of arrival (AoA) for a first direction of the plurality of antennas based on the signals, and transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

**[Description of the Drawings]**

FIG. 1 illustrates a wireless communication system.

FIG. 2 illustrates an example of a base station.

FIG. 3A illustrates an example of measurement information transmission.

FIG. 3B illustrates another example of measurement information transmission.

FIG. 4A illustrates an example of an angle of arrival (AoA) measurement using multiple antennas.

FIG. 4B illustrates an example of a two-dimensional (2D) antenna array.

FIG. 4C illustrates an example of a three-dimensional coordinate system.

FIG. 5 illustrates an example of a measurement information transmission procedure.

FIG. 6 illustrates an example of a procedure for configuring an AoA set based on an interval between antennas.

FIG. 7 illustrates an operation flow of an electronic device for setting a search range.

FIG. 8 illustrates an operation flow of an electronic device for obtaining an AoA.

FIG. 9 illustrates an operation flow of an electronic device for identifying a candidate AoA.

FIG. 10A illustrates an example of components of a distributed unit (DU).

FIG. 10B illustrates an example of components of a radio unit (RU).

**[Mode for Invention]**

Terms used in the present disclosure are used only to describe a specific embodiment and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., a signal, information, a message, or signaling), a term referring to a resources (e.g., a symbol, a slot, a subframe, a radio frame, a subcarrier, a resource element (RE), a resource block (RB), a bandwidth part (BWP), or an occasion), a term referring to a calculation state (e.g., a step, an operation, or a procedure), a term referring to data (e.g., a packet, a user stream, information, a bit, a symbol, or a codeword) a term referring to a radiator of an electronic device (e.g., an antenna, an antenna element, or an antenna port), a term referring to a network entity (e.g., a radio unit (RU), a distributed unit (DU), a digital unit (DU), or a central unit (CU)), a term referring to a component of an apparatus, and the like used in the following description are exemplified for convenience of description. Therefore, the present disclosure is not limited to terms to be described below, and another term having an equivalent technical meaning may be used. In addition, a term such as '...unit, '...device, '...object, and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in a partial communication standard (e.g., 3rd Generation Partnership Project (3GPP), extensible radio access network (xRAN), and open-radio access network (O-RAN)), but this is only an example for explanation. Various embodiments of the present disclosure may be easily modified and applied in another communication system.

A measurement signal in the present disclosure may mean a signal measured by a terminal to obtain a signal quality to be used for mobility, admission control, or radio resource management (RRM). For example, the measurement signal may be at least one of a synchronization signal (SS) (e.g., SS block), a beam reference signal (BRS), a beam refinement reference signal (BRRS), a cell-specific reference signal (CRS), a channel state information-reference signal (CSI-RS), and a demodulation-reference signal (DM-RS). According to embodiments, a base station may transmit not only a measurement signal of one type, but also a measurement signal of each of two or more types.

In the present disclosure, a signal quality may be, for example, at least one of reference signal received power (RSRP), beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), error vector magnitude (EVM), a bit error rate (BER), and a block error rate (BLER). In addition to the above-described example, of course, other terms having an equivalent technical meaning or other metrics indicating a channel quality may be used. Hereinafter, in the present disclosure, high signal quality means a case in which a signal quality value associated with a signal size is large or a signal quality value associated with an error rate is small. As the signal quality is higher, it may mean that a smooth wireless communication environment is guaranteed. In addition, an optimal beam may mean a beam having the highest signal quality among beams.

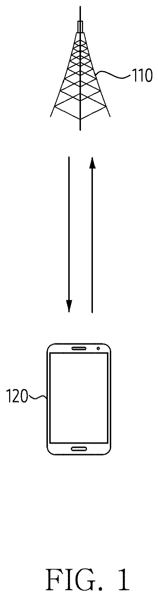

FIG. 1 illustrates a wireless communication system.

Referring to FIG. 1, FIG. 1 exemplifies a base station 110 and a terminal 120 as a portion of nodes using a wireless channel in the wireless communication system. Although FIG. 1 illustrates only one base station, the wireless communication system may further include another base station identical or similar to the base station 110.

The base station 110 is a network infrastructure for providing wireless access to the terminal 120. The base station 110 has coverage defined based on a distance at which a signal may be transmitted. In addition to a base station, the base station 110 may be referred to as an 'access point (AP)', an 'eNode B (eNB)', a '5th generation node', a 'next generation node B (gNB)', a 'wireless point', a 'transmission/reception point (TRP)', or another term having a technical meaning equivalent thereto.

The terminal 120, which is a device used by a user, may perform communication with the base station 110 through the wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through the wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without involvement of a user. According to an embodiment, the terminal 120, which is a device that performs machine type communication (MTC), may not be carried by a user. In addition, according to an embodiment, the terminal 120 may be MTC UE or a narrowband (NB)-internet of things (IoT) device.

In addition to a terminal, the terminal 120 may be referred to as 'user equipment (UE)', 'customerpremises equipment (CPE)', a 'mobile station', a 'subscriber station', a 'remote terminal', a 'wireless terminal', an 'electronic device', or a 'user device' or another term having a technical meaning equivalent thereto.

The base station 110 may perform beamforming with the terminal 120. The base station 110 and the terminal 120 may transmit and receive a wireless signal in a relatively low frequency band (e.g., a frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3 of NR), or a millimeter wave (mmWave) band (e.g., 28 GHz, 30 GHz, 38 GHz, or 60 GHz)). In order to improve a channel gain, the terminal 120 and the base station 110 may perform the beamforming. Herein, the beamforming may include transmission beamforming and reception beamforming. The base station 110 and the terminal 120 may assign directivity to a transmission signal or a reception signal. To this end, the base station 110 and the terminal 120 may select serving beams through a beam search or a beam management procedure.

After the serving beams are selected, subsequent communication may be performed through a resource that is in a Quasi Co-Location (QCL) relationship with a resource that transmitted the serving beams.

If large-scale characteristics of a channel that transferred a symbol on a first antenna port may be inferred from a channel that transferred a symbol on a second antenna port, the first antenna port and the second antenna port may be evaluated to be in the QCL relationship. For example, the large-scale characteristics may include at least one of a delay spread, a doppler spread, a doppler shift, an average gain, an average delay, and a spatial receiver parameter.

In FIG. 1, it is described that both the base station 110 and the terminal 120 perform the beamforming, but embodiments of the present disclosure are not necessarily limited thereto. In some embodiments, the terminal may or may not perform the beamforming. In addition, the base station may or may not perform the beamforming. That is, only one of the base station and the terminal may perform the beamforming, or both the base station and the terminal may not perform the beamforming.

In the present disclosure, a beam, which means a spatial flow of a signal in a wireless channel, may be formed by one or more antennas (or antenna elements), and this formation process may be referred to as the beamforming. The beamforming may include at least one of analog beamforming or digital beamforming (e.g., Precoding). A reference signal transmitted based on the beamforming may include, for example, a demodulation-reference signal (DM-RS), a channel state information-reference signal (CSI-RS), a synchronization signal/physical broadcast channel (SS/PBCH), and a sounding reference signal (SRS). In addition, as a configuration for each reference signal, an IE such as a CSI-RS resource or an SRS-resource may be used, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D)..

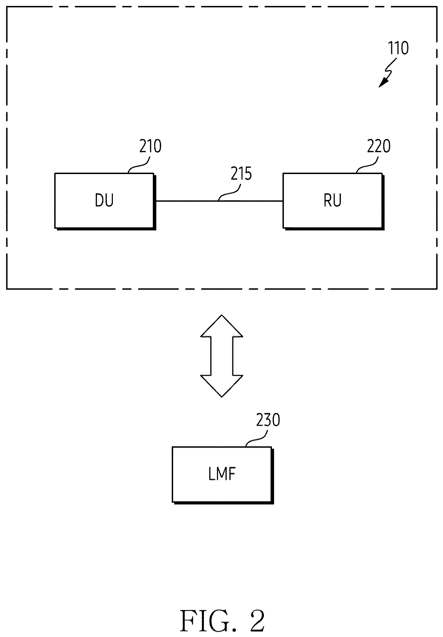

FIG. 2 illustrates an example of a base station (e.g., 110). In FIG. 2, a DU and an RU in which functions of the base station 110 are divided and implemented by different entities are described. For communication between the DU and the RU, a fronthaul interface may be used. Unlike backhaul between core networks in the base station 110, fronthaul refers to a space between entities between a wireless LAN and a base station. FIG. 2 illustrates an example of a fronthaul structure between a DU 210 and one RU 220, but this is only for convenience of explanation and the present disclosure is not limited thereto. In other words, an embodiment of the present disclosure may also be applied to a fronthaul structure between one DU and a plurality of RUs. For example, an embodiment of the present disclosure may be applied to a fronthaul structure between one DU and two RUs. In addition, an embodiment of the present disclosure may be applied to a fronthaul structure between one DU and three RUs.

Referring to FIG. 2, the base station 110 may include the DU 210 and the RU 220. Fronthaul 215 between the DU 210 and the RU 220 may be operated through an Fx interface. For an operation of the fronthaul 215, for example, an interface such as an enhanced common public radio interface (eCPRI) and radio over ethernet (ROE) may be used.

As communication technology is developed, mobile data traffic has increased, and accordingly, a bandwidth requirement required by the fronthaul between a digital unit and a wireless unit has increased significantly. In a deployment such as a centralized/cloud radio access network (C-RAN), the DU may be implemented to perform functions for a packet data convergence protocol (PDCP), a radio link control (RLC), a media access control (MAC), and a physical (PHY), and the RU may be implemented to further perform functions for a PHY layer in addition to a radio frequency (RF) function.

The DU 210 may be in charge of an upper layer function of a wireless network. For example, the DU 210 may perform a function of a MAC layer and a portion of the PHY layer. Herein, the portion of the PHY layer, which is performed at a higher level among functions of the PHY layer, may include, as an example, channel encoding (or channel decoding), scrambling (or descrambling), modulation (or demodulation), layer mapping (or layer demapping). According to an embodiment, in a case that the DU 210 conforms to an O-RAN standard, it may be referred to as an O-RAN DU (O-DU). The DU 210 may be represented by being replaced with a first network entity for a base station (e.g., gNB) in embodiments of the present disclosure as needed.

The RU 220 may be in charge of a lower layer function of the wireless network. For example, the RU 220 may perform a portion of the PHY layer and an RF function. Herein, the portion of the PHY layer, which is performed at a relatively lower level than the DU 210 among the functions of the PHY layer, may include, as an example, iFFT conversion (or FFT conversion), CP insertion (CP removal), and digital beamforming. The RU 220 may be referred to as an 'access unit (AU)', an 'access point (AP)', a 'transmission/reception point (TRP)', a 'remote radio head (RRH)', a 'radio unit (RU)', or another term having a technical meaning equivalent thereto. According to an embodiment, in a case that the RU 220 conforms to the O-RAN standard, it may be referred to as an O-RAN RU (O-RU). The RU 220 may be represented by being replaced with a second network entity for the base station (e.g., gNB) in the embodiments of the present disclosure as needed.

It is described that the base station 110 includes the DU 210 and the RU 220 in FIG. 2, but the embodiments of the present disclosure are not limited thereto. The base station according to embodiments may be implemented in a distributed deployment according to a centralized unit (CU) configured to perform a function of upper layers (e.g., a packet data convergence protocol (PDCP), a radio resource control (RRC)) of an access network, and a distributed unit (DU) configured to perform a function of lower layers. As an example, the distributed unit (DU) may include the digital unit (DU) and the radio unit (RU) of FIG. 2. In addition, as an example, between a core (e.g., a 5G core (5GC) or a next generation core (NGC)) network and a wireless network (RAN), the base station may be implemented in a structure in which the CU, the DU, and the RU are disposed in an order. An interface between the CU and the distributed unit (DU) may be referred to as an F1 interface.

The centralized unit (CU) may perform the function of the upper layers than the DU by being connected to one or more DUs. For example, the CU may be in charge of a function of a radio resource control (RRC) layer and a packet data convergence protocol (PDCP) layer, and the DU and RU may be in charge of the function of the lower layers. The DU may perform partial functions (high PHY) of a radio link control (RLC) layer, a media access control (MAC) layer, and a physical (PHY) layer, and the RU may be in charge of remaining functions (low PHY) of the PHY layer. In addition, as an example, the digital unit (DU) may be included in the distributed unit (DU) according to distributed deployment implementation of the base station. Hereinafter, unless otherwise defined, it is described as operations of the digital unit (DU) and the RU, but various embodiments of the present disclosure may be applied to both a base station deployment including the CU or a deployment in which the DU is directly connected to the core network (i.e., the CU and the DU are integrated and implemented into a base station (e.g., an NG-RAN node), which is one entity).

The base station 110 (or the DU 210) may perform communication with a location management server 230. The location management server 230 may be a network entity in charge of a location management function (LMF). Hereinafter, an operation of the LMF may be understood as an operation of a network entity (e.g., the location management server 230) in which an LMF function is implemented. For example, the location management server 230 may receive measurement information and support information from the base station 110 and a terminal 120 through an access and management function (AMF), and calculate a location of the terminal 120 based on the received information. In addition, for example, NRPPa, which is a new location confirmation protocol, may be defined to transmit location information or measurement information between the base station 110 and the location management server 230. The protocol may provide a framework for positioning in 5G. In addition, a framework for positioning between the terminal 120 and the location management server 230 based on an LTE Positioning Protocol (LPP) may be provided. The location management server 230 may support various location services for the terminal 120. The location management server 230 may obtain a result of location measurement of the terminal 120 based on uplink measurements and downlink measurements. In order to obtain the location of the terminal 120, the location management server 230 may determine a positioning method. The location management server 230 may support the base station 110 based on the positioning method.

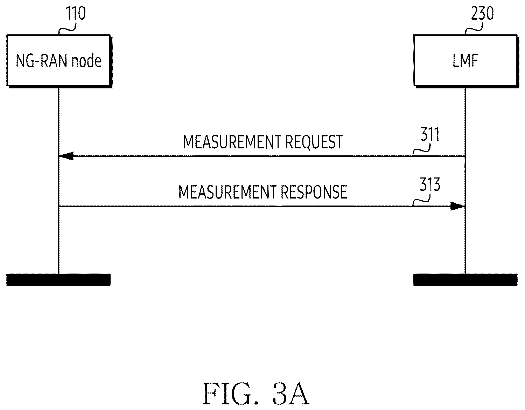

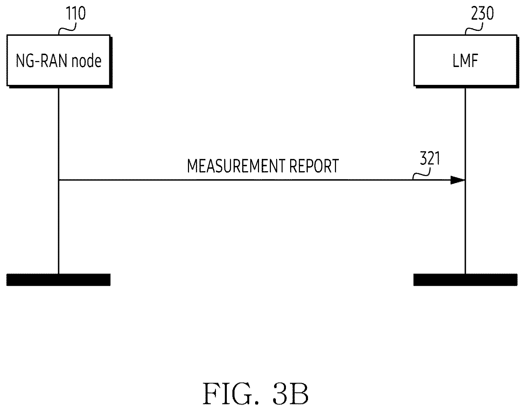

Hereinafter, the present disclosure relates to an apparatus and a method for obtaining the location of the terminal 120 based on wireless signals in a wireless communication system (e.g., an LTE communication system, or an NR communication system). Specifically, the present disclosure describes a technique for determining an angle of arrival (AoA) of signals based on reference signals (e.g., a demodulation (DM)- reference signal (RS), a sounding reference signal (SRS), a synchronization signal/physical broadcast channel (PBCH) block (SSB), a channel state information-reference signal (CSI-RS)) and antennas used in the wireless communication system. The AoA may be used to obtain location information of the terminal 120. In order to determine the location of the terminal 120, multiple AoAs may be provided to the location management server 230. Hereinafter, examples of signaling for transmitting the multiple AoAs to the location management server 230 are described in FIGS. 3A and 3B.

FIG. 3A illustrates an example of measurement information transmission. The measurement information transmission may be performed by an NG-RAN node (e.g., a base station 110) and an LMF (e.g., a location management server 230).

Referring to FIG. 3A, in operation 311, the LMF 230 may transmit a measurement request message to the NG-RAN node 110. The NG-RAN node 110 may receive the measurement request message from the LMF 230. In a measurement procedure, the LMF 230 may request one or more TRPs in the NG-RAN node 110 to perform and report a positioning measurement. The LMF 230 may provide information on one or more TRPs required to be measured through the measurement request message.

The measurement request message may include a message type, a transaction ID, an LMF measurement ID, and measurement request information to configure a positioning measurement. The measurement request information may include information (e.g., a TRP ID) on a TRP corresponding to a measurement target. According to an embodiment, the measurement request message may include information on a measurement quantity. The measurement quantity may indicate a type of a measurement parameter. For example, the type of the measurement parameter may indicate a receive-transmit time difference (RxTxTimeDiff), an SRS RSRP, a reference signal received path power (SRS RSRPP), a relative time arrival (RTOA), an uplink AoA, or multiple UL AoAs.

In operation 313, the NG-RAN node 110 may transmit a measurement response message to the LMF 230. The NG-RAN node 110 may transmit the measurement response message in response to the measurement request message. For example, in a case that report characteristic information is set to 'on-demand' in the measurement request message, the NG-RAN node 110 may transmit a measurement response message including a measurement result to the LMF 230 and terminate a procedure. For another example, in a case that report characteristic information is set to 'periodic' in the measurement request message, the NG-RAN node 110 may periodically transmit the measurement response message including the measurement result to the LMF 230 according to a report period.

The measurement response message may include a message type, a transaction ID, an LMF measurement ID, and an RAN measurement ID to report a measurement result of a terminal (e.g., a terminal 120) that is a target of positioning. The measurement response message may include a measurement result. For example, the measurement response message may include a measurement result for each TRP of one or more TRPs. The one or more TRPs may be indicated by the measurement request message in the operation 311. The measurement response message may include a TRP ID and a measurement result on a TRP of the TRP ID. In addition, for example, the measurement report message may further include a cell ID. The cell ID may indicate a cell provided by the TRP of the TRP ID. According to an embodiment, the measurement result may include a value according to a type of a measurement parameter. For example, the measurement result may include a UL SRS-RSRP, a UL RTOA, a receive-transmit time difference (e.g., gNB Rx-TX Time difference), a zenith (Z)-AoA, an azimuth (A)-AoA, multiple UL AoAs, or a UL SRS-RSRPP.

FIG. 3B illustrates another example of measurement information transmission. The measurement information transmission may be performed by an NG-RAN node (e.g., a base station 110).

Referring to FIG. 3B, in operation 321, the NG-RAN node 110 may transmit a measurement report message to an LMF (e.g., a location management server 230). A measurement reporting procedure causes the NG-RAN node 110 to report location measurements to the LMF 230. The NG-RAN node 110 may initiate a procedure by transmitting the measurement report message to the LMF 230. The measurement report message may include a measurement result according to a related measurement configuration.

The measurement report message may include a message type, a transaction ID, an LMF measurement ID, and an RAN measurement ID to report a measurement result of a terminal (e.g., a terminal 120) that is a target of positioning. The measurement report message may include a measurement result. For example, the measurement report message may include a measurement result for each TRP of one or more TRPs. The one or more TRPs may be indicated by the measurement request message in the operation 311. The measurement report message may include a TRP ID and a measurement result for a TRP of the TRP ID. In addition, for example, the measurement report message may further include a cell ID. The cell ID may indicate a cell provided by the TRP of the TRP ID. According to an embodiment, the measurement result may include a value according to a type of a measurement parameter. For example, the measurement result may include a UL SRS-RSRP, a UL RTOA, a receive-transmit time difference (e.g., gNB Rx-TX Time difference), a zenith (Z)-AoA, an azimuth (A)-AoA, multiple UL AoAs, or a UL SRS-RSRPP.

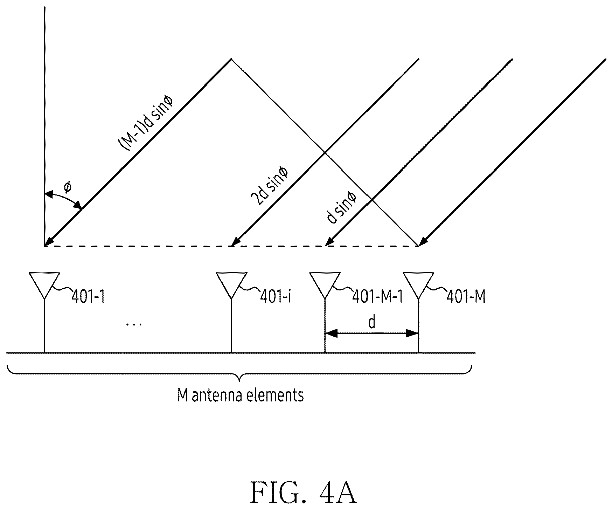

FIG. 4A illustrates an example of an angle of arrival (AoA) measurement using multiple antennas. Electronic devices (e.g., a base stations 110, an RU 220, and a massive MIMO unit (MMU)) for obtaining an AoA of the present disclosure may include the multiple antennas. Each antenna of the multiple antennas may be referred to as an antenna element of an array antenna.

Referring to FIG. 4A, an electronic device may include a plurality of antennas 401-1, ..., 401-i, ..., 401-M-1, and 401-M. For example, the electronic device may include M antennas (M is an integer equal to or greater than 2). An interval between antennas may be d.

The electronic device may estimate an AoA. The electronic device may receive signals through the plurality of antennas. The electronic device may receive a signal through each antenna of the plurality of antennas. For example, the electronic device may receive a reference signal through each antenna. The electronic device may obtain a phase in each antenna. The electronic device may calculate magnitude of a phase varying between antennas and determine an AoA based on the magnitude of the phase.

In a wireless communication system (e.g., an LTE communication system, or an NR communication system) providing a mobile network, a far field may be defined. In the far field, an electromagnetic signal may be interpreted as a plane wave. Signals received through a plurality of antennas may be represented as in FIG. 4A. Assume that a distance between an M-1th antenna 401-M-1 and an Mth antenna 401-M is d. For example, the signals are incident at an angle of $\Phi$ based on a direction perpendicular to a surface in which the plurality of antennas 401-1, ..., 401-i, ..., 401-M-1, and 401-M are arranged. A physical distance between a signal received through the Mth antenna 401-M and a signal received through the M-1th antenna 401-M-1 is dsin $\Phi$. A physical distance between the signal received through the Mth antenna 401-M and a signal received through an M-2th antenna is 2dsin $\Phi$. A physical distance between the signal received through the Mth antenna 401-M and a signal received through a first antenna is (M-1)dsin $^\Phi$.

Since a physical distance experienced by a signal varies, a phase of a signal received by each antenna may vary according to an angle at which the signal is incident. The electronic device may estimate an AoA based on a phase difference between antennas. In FIG. 4A, a one-dimensional antenna array, that is, a linear array, is illustrated. The electronic device may estimate a horizontal/azimuth angle or a vertical/zenith angle according to an arrangement direction of the linear array including the plurality of antennas 401-1, ..., 401-i, ..., 401-M-1, and 401-M. Meanwhile, an AoA may be estimated not only in the linear array illustrated in FIG. 4A but also in a two-dimensional (2D) antenna array. The electronic device including the 2D antenna array may estimate both the horizontal/azimuth angle or the vertical/zenith angle.

A method of estimating an AoA using a phase difference between antennas may use an algorithm based on a correlation operation. The electronic device may set an angle range to be searched for a terminal, which is a target for measuring a location. The electronic device may determine candidate angles based on the set angle range, and determine a steering vector for each candidate angle. The steering vector represents a set of phase differences entering each antenna for a single direction signal. For example, the electronic device may set a horizontal search range from -90 degrees to 90 degrees. The electronic device may determine 181 steering vectors by dividing candidate angles into 1-degree units. The electronic device may calculate a correlation between a received RS signal and each steering vector. The electronic device may identify a candidate angle associated with a steering vector having the largest correlation magnitude (e.g., a squared L2 norm). The electronic device may determine the identified candidate angle as an AoA.

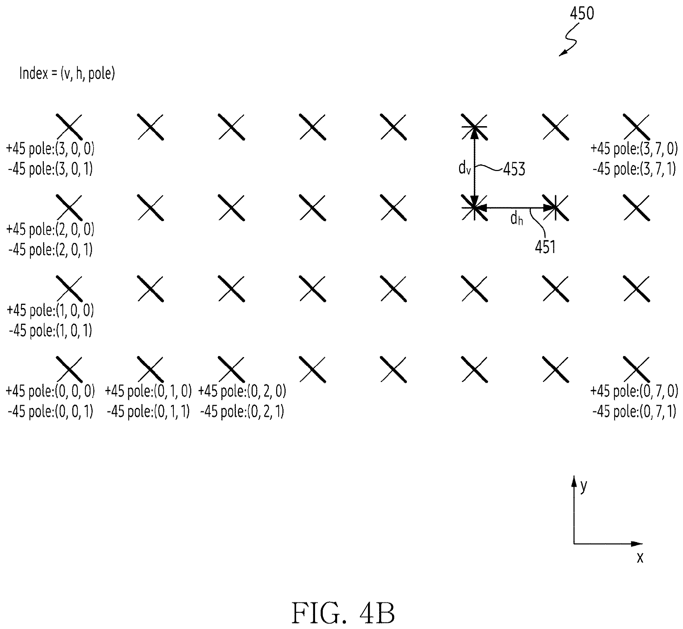

FIG. 4B illustrates an example of a two-dimensional (2D) antenna array.

Referring to FIG. 4B, an electronic device (e.g., a base station 110, a RU 220, or a massive MIMO unit (MMU)) may include a 2D antenna array 450. The 2D antenna array 450 may include a plurality of antennas in a two-dimensional plane. For example, an x-axis of the two-dimensional plane may be referred to as a first direction or a horizontal domain. A y-axis of the two-dimensional plane may be referred to as a second direction or a vertical domain. The 2D antenna array 450 may support a dual polarization. A first polarization and a second polarization of the dual polarization may be substantially perpendicular to each other. For example, each antenna of the 2D antenna array 450 may support a +45 degree polarization or a -45 degree polarization. In addition, for example, each antenna of the 2D antenna array 450 may support a horizontal polarization or a vertical polarization.

A location of an antenna in the two-dimensional plane of the 2D antenna array 450 may be represented by a horizontal index h and a vertical index v. Two antennas having the same horizontal index and the same vertical index may have different polarizations. For example, the two antennas may be disposed in an X shape. The two antennas may be referred to as a cross-pole (x-pol) antenna. A polarization may represent a pole. A specific polarization may be represented by an index '0'. A polarization substantially perpendicular to the specific polarization may be referred to as an index '1'. Each antenna of the 2D antenna array 450 may be indicated by an indexes v, h, or pole.

The antennas of the 2D antenna array 450 may be spaced apart from each other. When assuming a cross-pole antenna, a distance between an intersection of the two antennas of the cross-pole antenna and an intersection between other two antennas may represent a separation distance between the antennas. In the horizontal domain, a distance between antennas may be referred to as a horizontal distance 451 $d_h$. For example, a distance between (2, 6, 0) and (2, 5, 0) may be the horizontal distance 451 $d_h$. In the vertical domain, a distance between antennas may be referred to as a vertical distance 453 $d_v$. For example, a distance between (3, 5, 0) and (2, 5, 0) may be the vertical distance 453 $d_v$.

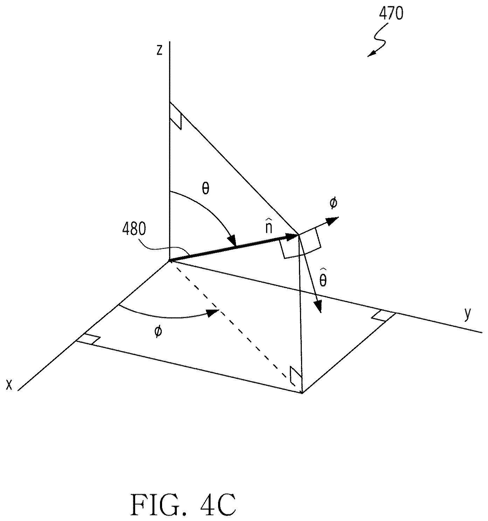

FIG. 4C illustrates an example of a three-dimensional coordinate system.

Referring to FIG. 4C, a vector 480 in a three-dimensional coordinate system 470 may represent a vector of an incident signal. For example, the 2D antenna array 450 of FIG. 4B may be located on a y-z plane of the three-dimensional coordinate system 470. Through the 2D antenna array 450, an electronic device may estimate an AoA in a horizontal direction and an AoA in a vertical direction.

For example, in a horizontal domain (e.g., the y-axis), a mth horizontal AoA candidate may be $\phi_m$. For example, in a vertical domain (e.g., the z-axis), a nth vertical AoA candidate may be $\theta_n$. The electronic device may obtain a steering vector $s(\phi_m, \theta_n)$ based on the mth horizontal AoA candidate and the nth vertical AoA candidate. For example, a steering vector of an antenna corresponding to an index of (h, v) may be represented by the following equation.

【Equation 1】

$$s_{h,v}(\phi_m, \theta_n) = \exp\left( j\frac{2\pi}{\lambda_0} \left( h d_h \sin\theta_n \sin\phi_m + v d_v \cos\theta_n \right) \right)$$

h represents an antenna index in a horizontal direction (e.g., the y-axis), and v represents an antenna index in a vertical direction (e.g., the z-axis). $d_v$ represents an interval (hereinafter, a vertical interval or a first interval) between antennas in the vertical direction. $d_h$ represents an interval (hereinafter, a horizontal interval or a second interval) between antennas in the horizontal direction. Since the steering vector may be applied to poles 0 and 1 of the 2D antenna array 450 without distinction, a pole index may be omitted.

A result of de-correlation of an RS sequence with a signal received from a (h, v)-th antenna may be $\gamma_{h,u}$. For all candidate angles $\phi_m$ and $\theta_n$, a correlation between a steering vector and the received RS signal $\gamma_{h,v}$ may be calculated.

【Equation 2】

$$CORR(\phi_m, \theta_n) = \sum_{h=0}^{N_h-1} \sum_{v=0}^{N_v-1} s_{h,v}^*(\phi_m, \theta_n) y_{h,v}$$

$CORR(\phi_m, \theta_n)$ represents the correlation. $N_h$ means the number of antennas (e.g., 8) arranged in the horizontal direction in the 2D antenna array 450, and $N_v$ represents the number of antennas (e.g., 4) arranged in the vertical direction in the 2D antenna array 450. $S_{h,v}^*$ is a conjugate complex number of $S_{h,v}$.

A correlation calculation is a complex number multiplication operation, and a correlation result is also a complex number. The electronic device may finally identify $\{\hat{\phi}, \hat{\theta}\}$ in which a value of a squared L2 norm of the complex number correlation result is maximized.

【Equation 3】

$$\{\hat{\phi}, \hat{\theta}\} = \underset{\phi_m, \theta_n}{\mathrm{argmax}}\{\|CORR(\phi_m, \theta_n)\|^2\}$$

$\hat{\phi}$ means an estimated horizontal AoA, and $\hat{\theta}$ means an estimated vertical AoA. The estimated horizontal AoA and the estimated vertical AoA may be reported to the location management server 230.

In a method estimated through Equation 1 to Equation 3, a range of an AoA that may be estimated without angle ambiguity may be determined by spacing between antennas. If the spacing between the antennas is larger than $0.5\lambda_0$ ($\lambda_0$: a wavelength of a signal), the angle ambiguity may occur. For example, steering vectors using only an nth vertical AoA candidate may be represented by the following equation.

【Equation 4】

$$s(\theta_n) = \left[1, \exp\left(j\frac{2\pi}{\lambda_0}d_v\cos\theta_n\right), \exp\left(j\frac{2\pi}{\lambda_0}2d_v\cos\theta_n\right), \dots, \exp\left(j\frac{2\pi}{\lambda_0}(v-1)d_v\cos\theta_n\right)\right]$$

A phase difference between two adjacent antennas in the steering vector is $\Delta\theta_n = \frac{2\pi}{\lambda_0}d_v\cos\theta_n$ (e.g., a phase difference when v = 1 and v = 2). If $\Delta\theta$ is the same at two or more candidate angles, steering vector component values of the candidate angles may all be the same. Therefore, the electronic device or the location management server 230 may not distinguish the above-described candidate angles through a correlation measurement with a received signal. This angle ambiguity occurs when a phase difference $\Delta\theta_n$ for a plurality of candidate angles differs by a multiple of $2^\delta$. For example, an equation for a condition in which the angle ambiguity occurs may be represented as follows.

【Equation 5】

$$\frac{2\pi}{\lambda_0}d_v\cos\theta_n = \frac{2\pi}{\lambda_0}d_v\cos\theta_{\acute{n}} + 2k\pi \quad (k: \text{integer})$$

In an array antenna equipped in the electronic device, if the interval between the antennas is greater than $0.5\lambda_0$, the angle ambiguity inevitably occurs. Since an estimated AoA is not known whether it is an incident angle of an actual terminal or a mirror angle due to ambiguity, it is difficult for the electronic device or the location management server 230 to estimate an accurate location of a terminal (e.g., a terminal 120).

To solve the above-described problem, the electronic device (e.g., the base station 110 or the DU 210, hereinafter described based on the base station 110) according to embodiments may report multiple AoAs to the location management server 230 (e.g., LMF) instead of simply reporting only the estimated AoA to the location management server 230. A plurality of AoAs may include the estimated AoA and a mirror AoA considering the angle ambiguity. For example, an angle between two signals in a first example may be $a_1$, and an angle between two signals in a second example may be $a_2$. However, a phase difference between the two signals in the first example may be the same as a phase difference between the two signals in the second example. Due to a periodic characteristic of a sinusoidal wave, cases having the same phase difference but having different angles may occur. As such, an AoA value having a different value from the estimated AoA but having the same phase difference characteristic may be referred to as a mirror AoA.

The base station 110 may transmit a plurality of AoA values (e.g., **AoA set = $\{\theta_0, \theta_1, ..., \theta_7\}$**) including at least one mirror AoA determined based on the angle ambiguity to the location management server 230. Since a plurality of AoA values including a mirror AoA are provided to the location management server 230, the location management server 230 may more accurately estimate the location of the terminal (e.g., the terminal 120) based on the plurality of AoA values. In order to improve a positioning performance of the location management server 230, the base station 110 is required to estimate all mirror AoAs according to the angles ambiguity and report the estimated AoA and mirror AoAs to the location management server 230.

In order to report a plurality of AoAs (e.g., up to 8 AoAs), the base station 110 may determine a candidate angle using a correlation-based AoA estimation algorithm described in Equation 1 to Equation 3. For example, the base station 110 may select 8 candidate angles having the largest square L2 norm of correlation. The base station 110 may report the selected 8 candidate angles to the location management server 230. Meanwhile, in order to report multiple AoAs, a search range of AoA may be increased. The search range may be set to be wider than a search range in a case of estimating a single AoA to include all mirror angles generated by the angle ambiguity. However, an angle estimation method using an excessively wide search range causes it difficult to distinguish a signal from another terminal. It is required to distinguish whether an angle selected based on correlation is a mirror angle for the terminal 120 or an angle for a signal of another terminal.

As an interval between antennas increases, a MIMO transmission/reception performance may increase. This is because correlation of a signal received by each antenna decreases, and an antenna diversity characteristic improve, as the interval between antennas increases. Since a MMU or an RU 220 for a modem of the base station 110 has a smaller size limit than the terminal 120, a margin for the interval between antennas is high to improve the MIMO transmission/reception performance. Therefore, cases in which the interval between antennas equipped in the base station 110 or the RU 220 is greater than **$0.5\lambda_0$** frequently exist. However, as the interval between antennas increases, a coverable angle range increases, so the angle ambiguity may occur more frequently. The base station 110 may report multiple AoAs to the location management server 230 to resolve the angle ambiguity and improve a positioning performance of the terminal 120. The base station 110 may widen a search range to obtain multiple AoAs. The number of candidate angles also increases due to the widened search range. If the base station 110 calculates correlation with respect to all candidate angles, an amount of operation at the base station 110 increases. A high amount of operation may increase implementation complexity of an algorithm. For example, in order to search a range [-60, 60] in the horizontal direction and a range [-30, 30] in the vertical direction at a 0.1 degree interval, complex multiplication operations on a received RS signal are required for each of the total 1201 * 601 or 1201 + 601 steering vectors.

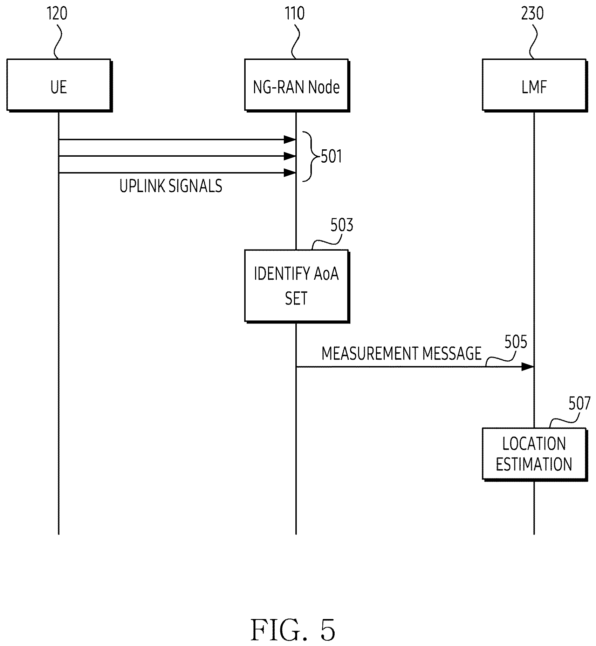

FIG. 5 illustrates an example of a measurement information transmission procedure.

Referring to FIG. 5, in operation 501, a terminal 120 may transmit uplink signals to a base station 110. The base station 110 may include the NG-RAN node of FIGS. 3A to 3B. For example, the uplink signals may include SRSs. The base station 110 may receive the uplink signals from the terminal 120. The base station 110 may receive the uplink signals through a plurality of antennas. The base station 110 may receive an uplink signal through each antenna of the plurality of antennas.

In operation 503, the base station 110 may identify an AoA set. The AoA set may include a plurality of AoAs. The base station 110 may determine a phase of the uplink signal obtained through each antenna of the plurality of antennas. The base station 110 may determine an AoA (hereinafter, referred to as a reference AoA) based on a phase difference between antennas. The base station 110 may determine at least one mirror AoA associated with the reference AoA. The base station 110 may determine an AoA set including the reference AoA and the at least one mirror AoA.

In operation 505, the base station 110 may transmit a measurement message to a location management server 230. The location management server 230 may include the LMF 230 of FIGS. 3A to 3B. For example, the measurement message may include a location measurement response message corresponding to the location measurement request message of FIG. 3A. In addition, for example, the measurement message may include the location measurement report message of FIG. 3B. According to an embodiment, the measurement message may include an AoA set. For example, the measurement message may include a value based on a type of a measurement parameter. The type of the measurement parameter may indicate multiple UL AoAs. The measurement message may include a plurality of AoAs of the AoA set.

In operation 507, the location management server 230 may perform location estimation of the terminal 120. The location management server 230 may perform the location estimation of the terminal 120 based on the measurement message. The location management server 230 may perform the location estimation of the terminal 120 based on the plurality of AoAs.

Although an operation of the base station 110 has been described in FIG. 5, embodiments of the present disclosure are not limited thereto. In a distributed deployment scenario, operations of the base station 110 may be separated into operations of a DU 210 and operations of an RU 220. For example, uplink signals of the terminal 120 may be received by the RU 220. The uplink signals may be transmitted from the RU 220 to the DU 210. For example, the RU 220 may provide the uplink signals to the DU 210 through a U-plane message on a fronthaul interface. The DU 210 may determine an AoA of signals incident from antennas of the RU 220 based on a phase change amount of the uplink signals. The DU 210 may transmit the determined AoA to the location management server 230. In addition, for another example, the uplink signals of the terminal 120 may be received by the RU 220. The RU 220 may obtain a phase change amount of the uplink signals. The RU 220 may transmit information on the phase change amount to the DU 210. The DU 210 may determine an AoA of signals incident from the antennas of the RU 220 based on the phase change amount. The DU 210 may transmit the determined AoA to the location management server 230.

In the present disclosure, a method of setting a search range in which angle ambiguity does not occur based on antenna arrangement information (e.g., an interval between antenna elements, an interval $d_h$ between antenna elements in a horizontal domain, an interval between antenna elements $d_v$ in a vertical domain) is described. In addition, a method for theoretically deriving a mirror AoA from an AoA obtained through the search range is described. For example, an angle between two signals in a first example may be ai, and an angle between two signals in a second example may be $a_2$. However, a phase difference between the two signals in the first example may be the same as a phase difference between the two signals in the second example. Due to a periodic characteristic of a sinusoidal wave, cases having the same phase difference but having different angles may occur. As such, an AoA value having a different value from the estimated AoA but having the same phase difference characteristic may be referred to as a mirror AoA.

A node (e.g., the base station 110) according to embodiments of the present disclosure may estimate an AoA with low complexity by limiting a search range of AoA to a range in which a mirror AoA does not occur before performing a correlation operation of a steering vector. By deriving mirror AoAs based on the estimated AoA and the periodic characteristic of the sinusoidal wave, a correlation operation procedure for obtaining a mirror AoA may be omitted. In addition, an estimation error rate that may occur through a correlation operation may be reduced.

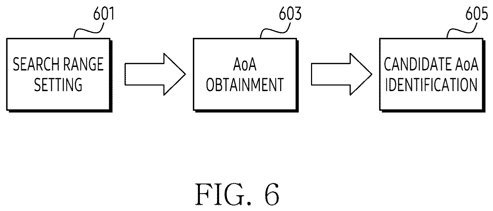

FIG. 6 illustrates an example of a procedure for configuring an AoA set based on an interval between antennas. The AoA set may include a reference AoA and a plurality of mirror AoAs associated with the reference AoA. According to an embodiment, the AoA set may be configured for each dimension. For example, in a 2D antenna array (e.g., a 2D antenna array 450), an AoA set may be configured for each of a horizontal domain and a vertical domain. In addition, for example, in a linear array (e.g., the plurality of antennas 401-1, ..., 401-i, ..., 401-M-1, and 401-M of FIG. 4A), an AoA set for a first direction may be configured.

Referring to FIG. 6, the procedure for configuring an AoA set may include a search range setting 601, AoA obtainment 603, and candidate AoA identification 605. Hereinafter, the procedure for configuring the AoA set is described as operations by a base station 110 for reporting multiple AoAs, but embodiments of the present disclosure are not limited thereto. In a distributed deployment scenario, operations of the base station 110 to be described later may be separated into operations of a DU 210 and operations of an RU 220. For example, an operation in which the base station 110 receives a signal may be performed by the RU 220. In addition, for example, an operation of transmitting multiple AoA values from the base station 110 to a location management server 230 may be performed by the DU 210.

1. Search range setting 601

The base station 110 may obtain antenna array information of the base station 110. The antenna array information may include an interval between antennas of an array antenna. For example, the antenna array information may include an interval $d_h$ of a horizontal domain and an interval $d_v$ of a vertical domain of the 2D antenna array. As an example, if the interval $d_h$ of the horizontal domain is the same as the interval $d_v$ of the vertical domain, it may be represented as a single parameter d.

The base station 110 may set an AoA search range in which angle ambiguity does not occur based on the antenna array information. The base station 110 may determine candidate angles within the set AoA search range. The base station 110 may generate steering vectors for the candidate angles. In order to describe embodiments of the present disclosure, the environment of FIGS. 4B to 4C is assumed. In addition, a range of an angle in the vertical domain may be

$$0° \leq \theta(degree) \leq 180° \; (\theta(degree) = \theta \times \frac{180}{\pi})$$, and a range of an angle in the horizontal domain may be

$$-90° \leq \phi(degree) \leq 90° \; (\phi(degree) = \phi \times \frac{180}{\pi})$$. However, this limitation of the range of the angle is merely exemplary for description and is not to be interpreted as limiting embodiments of the present disclosure.

(1) AoA in vertical direction (hereinafter, a first AoA)

As described in Equation 5, the angle ambiguity may occur when differences $\Delta\theta_{\tilde{n}}$ and $\Delta\theta_n$ for a plurality of candidate angles differ by a multiple of $2^{\delta}$. Therefore, if $\Delta\theta_n$ exists within a $[-\pi, \pi]$ range, the angle ambiguity may not occur.

【Equation 6】

$$-\pi \leq \frac{2\pi}{\lambda_0} d_v \cos\theta_n \leq \pi$$

$\lambda_0$ represents a wavelength, and $\theta_n$ represents a nth candidate zenith angle. $\theta_n$ satisfying a condition of the above-described equation may be determined according to an interval between antennas (hereinafter, referred to as a first interval $d_v$) in the vertical domain.
For example, in a case that the first interval is less than or equal to half of the wavelength $\lambda_0$ (hereinafter, half wavelength) of a signal, a search range for the first AoA $\theta_n$ may be $0 \leq \theta_n \leq \pi$. In a case that the first interval is greater than the half wavelength, the search range for the first AoA $\theta_n$ may be determined based on the following equation.

【Equation 7】

$$\cos^{-1}\left(\frac{\lambda_0}{2d_v}\right) \leq \theta_n \leq \pi - \cos^{-1}\left(\frac{\lambda_0}{2d_v}\right)$$

In a case of $d_v \leq 0.5\lambda_0$, since the angle ambiguity does not occur in an entire range of $0° \leq \theta(degree) \leq 180°$, the base station 110 may set a search range for estimating the first AoA to an entire range. However, in a case of $d_v > 0.5\lambda_0$, the base station 110 may set the search range for estimating the first AoA based on the angle ambiguity, the first interval, and a length of the half wavelength (e.g., Equation 7).

(2) AoA in horizontal direction (hereinafter a second AoA)

As in the vertical domain, the angle ambiguity occurs when $\Delta\phi_{\tilde{m}}$ **and** $\Delta\phi_m$ for a plurality of candidate angles differ by a multiple of $2^{\delta}$.

【Equation 8】

$$\frac{2\pi}{\lambda_0} d_h \sin\theta_n \sin\phi_m = \frac{2\pi}{\lambda_0} d_h \sin\theta_n \sin\phi_{\tilde{m}} + 2g\pi$$

$g$ represents an arbitrary integer, $\theta_n$ represents an nth candidate zenith angle, $\phi_m$ represents an mth candidate azimuth angle, and $\phi_{\tilde{m}}$ represents a $\tilde{m}$ **th** candidate azimuth angle. Therefore, if $\Delta\phi_m$ exists within the range $[-\pi, \pi]$, the angle ambiguity does not occur.

【Equation 9】

$$-\pi \leq \frac{2\pi}{\lambda_0} d_h \sin\theta_n \sin\phi_m \leq \pi$$

Referring to the above-described equation, a range of $\phi_m$ relies on not only $d_h$, which is an interval between antennas in the horizontal domain, but also $\theta_n$ corresponding to the first AoA. Therefore, an estimation method of the second AoA may vary according to whether a first AoA value is obtained.

According to an embodiment, in a situation in which the first AoA value is given, the base station 110 may estimate the second AoA. The base station 110 may use the previously estimated first AoA or estimate the first AoA first, and then sequentially estimate the second AoA. At this time, a length of a wavelength to be compared with the interval between antennas (e.g., the second interval $d_h$) may be $\frac{\lambda_0}{\sin \theta_n}$ instead of $\lambda_0$. In a case that the second interval is less than or equal to $\frac{\lambda_0}{\sin \theta_n}$, the base station 110 may set a search range for estimating the second AoA as an entire range. For example, the entire range may be $-\frac{\pi}{2} \leq \phi_m \leq \frac{\pi}{2}$. In a case that the second interval is greater than $\frac{\lambda_0}{\sin \theta_n}$, the base station 110 may set the search range for estimating the second AoA based on the following equation.

【Equation 10】

$$-\sin^{-1}\left(\frac{\lambda_0}{2d_h \sin \theta_n}\right) \leq \phi_m \leq \sin^{-1}\left(\frac{\lambda_0}{2d_h \sin \theta_n}\right)$$

According to another embodiment, in a situation in which the first AoA value is not given, the base station 110 may estimate the second AoA. In a case that a terminal 120 moves frequently or quickly, it may not be easy for the base station 110 to use the previously estimated first AoA. Instead of sequentially performing the first AoA and the second AoA, the base station 110 may estimate the first AoA and the second AoA in parallel (or simultaneously). If the first interval $d_v$ is not greater than the length of the half wavelength or the second interval $d_h$ is not greater than the length of the half wavelength, the base station 110 may set the search range for estimating the second AoA as an entire range. For example, the entire range may be $-\frac{\pi}{2} \leq \phi_m \leq \frac{\pi}{2}$. If the first interval $d_v$ is greater than the length of the half wavelength and the second interval $d_h$ is greater than the length of the half wavelength, the base station 110 may set the search range for estimating the second AoA based on the following equation.

【Equation 11】

$$-\sin^{-1}\left(\min\left[\frac{\lambda_0}{2d_h \sin\left(\cos^{-1}\left(\frac{\lambda_0}{2d_v}\right)\right)}, 1\right]\right) \leq \phi_m \leq \sin^{-1}\left(\min\left[\frac{\lambda_0}{2d_h \sin\left(\cos^{-1}\left(\frac{\lambda_0}{2d_v}\right)\right)}, 1\right]\right)$$

Meanwhile, the Equation 11 is exemplary, and the Equation 11 is not interpreted as limiting embodiments of the present disclosure. Of course, another equation to which an operational principle applied to the Equation 11 (e.g., an operation for projecting a spatial vector onto a specific surface) is applied may be used to determine the search range for estimating the second AoA.

2. AoA obtainment 603

The base station 110 may determine the search range for estimating the first AoA (hereinafter, a first search range). The base station 110 may determine the search range for estimating the second AoA (hereinafter, referred to as a second search range).

The base station 110 may obtain an AoA based on the first search range and the second search range. The base station 110 may obtain the first AoA based on the first search range. The first AoA, which is a value that is a reference for configuring an AoA set in a first direction (e.g., the vertical domain), may be referred to as a first reference AoA. The base station 110 may obtain the second AoA based on the second search range. The second AoA, which is a reference value for configuring an AoA set in a second direction (e.g., the horizontal domain), may be referred to as a second reference AoA.

In a step of the search range setting 601, both the first search range and the second search range are set as a range for preventing the angle ambiguity from occurring. For example, the first search range may be represented by $[\theta_{min}, \theta_{max}]$, and the second search range may be represented by $[\phi_{min}, \phi_{max}]$. Based on resolution (e.g., $\theta_{step}$, or $\phi_{step}$) of an AoA estimation value to be estimated, the base station 110 may determine candidate angle sets. For example, candidate angle sets in each domain may be represented by the following equation.

【Equation 12】

$$\theta_n = \theta_{min} + n\theta_{step}, n = 0, 1, 2, \ldots$$
$$\phi_m = \phi_{min} + m\phi_{step}, m = 0, 1, 2, \ldots$$

As an example, a standard of 3GPP Release 17 stipulates that an AoA in units of 0.1 is reported to an LMF, so $\theta_{step}$ and $\phi_{step}$ may be set to 0.1 degrees, respectively.

In the 2D antenna array 450, the first AoA and the second AoA may be obtained based on two methods. The two methods may include a sequential estimation method and a parallel estimation method.

According to an embodiment, the base station 110 may obtain the first AoA and the second AoA based on the sequential method. For example, a steering vector for the first AoA (hereinafter, a vertical steering vector) and a steering vector for the second AoA (hereinafter, a horizontal steering vector) may be represented by the following equation.

【Equation 13】

$$s_v(\theta_n) = \exp\left(j\frac{2\pi}{\lambda_0}vd_v\cos\theta_n\right)$$
$$s_h(\phi_m|\hat{\theta}) = \exp\left(j\frac{2\pi}{\lambda_0}hd_h\sin\hat{\theta}\sin\phi_m\right)$$

$s_v(\theta_n)$ represents a vertical steering vector when the first AoA is $\theta_n$, and $s_h(\phi_m|\hat{\theta})$ represents a horizontal steering vector when the second AoA is $\phi_m$. In particular, in the horizontal steering vector, $\hat{\theta}$ represents a value of the first AoA estimated based on the vertical steering vector.

According to another embodiment, the base station 110 may obtain the first AoA and the second AoA based on the parallel estimation method. For example, a joint steering vector for the first AoA and the second AoA may be represented by the following equation.

【Equation 14】

$$s_{h,v}(\phi_m,\theta_n) = \exp\left(j\frac{2\pi}{\lambda_0}(hd_h\sin\theta_n\sin\phi_m + vd_v\cos\theta_n)\right)$$

The base station 110 may obtain the first AoA and the second AoA based on a correlation operation for a steering vector. Define a result of decorrelating an RS sequence from a RS signal received from a (h, v)-th antenna be $y_{h,v}$. For example, in the sequential estimation method, the first AoA $\hat{\theta}$ may be determined as a zenith angle **that** maximizes magnitude of a correlation operation with the vertical steering vector (e.g., $s_v(\theta_n)$ of Equation 13) among candidate angles. As an example, the first AoA $\hat{\theta}$ may be estimated based on the following equation.

【Equation 15】

$$CORRV(\theta_n) = \sum_{h=0}^{N_h-1}\left\|\sum_{v=0}^{N_v-1}s_v^*(\theta_n)y_{h,v}\right\|^2 \rightarrow \hat{\theta} = \underset{\theta_n}{\mathrm{argmax}}\{CORRV(\theta_n)\}$$

The second AoA $\hat{\phi}$ may be determined as an azimuth angle that maximizes magnitude of a correlation operation with the horizontal steering vector $\hat{\phi}$ (e.g., $s_h(\phi_m|\hat{\theta})$ of Equation 13) among candidate angles. As an example, the second AoA $\hat{\phi}$ may be estimated based on the following equation.

【Equation 16】

$$CORRH(\phi_m|\hat{\theta}) = \sum_{v=0}^{N_v-1} \left\| \sum_{h=0}^{N_h-1} s_h^*(\phi_m|\hat{\theta})y_{h,v} \right\|^2 \rightarrow \hat{\phi} = \underset{\phi_m}{\mathrm{argmax}}\{CORRH(\phi_m|\hat{\theta})\}$$

For another example, in the parallel estimation method, the first AoA and the second AoA may be determined as a combination of an azimuth angle and a zenith angle that maximizes magnitude of a correlation operation with the joint steering vector (e.g., $s_{h,v}(\phi_m,\theta_n)$ of Equation 14) among combinations of candidate angles.

【Equation 17】

$$CORR(\phi_m,\theta_n) = \sum_{N_h,N_v} s_{h,v}^*(\phi_m,\theta_n)y_{h,v} \rightarrow \{\hat{\phi},\hat{\theta}\} = \underset{\phi_m,\theta_n}{\mathrm{argmax}}\{\|CORR(\phi_m,\theta_n)\|^2\}$$

3. Candidate AoA identification 605

The base station 110 may obtain the first AoA through a correlation operation. The base station 110 may obtain the second AoA through the correlation operation. The base station 110 may estimate the first AoA in the first search range in which the angle ambiguity does not occur with respect to the vertical domain, and estimate the second AoA in the second search range in which the angle ambiguity does not occur with respect to the horizontal domain.

Since a probability of a phase difference that may occur overlappingly according to a characteristic of a sinusoidal wave is reduced by limiting a search range, the base station 110 may determine mirror AoAs through an operation according to the angular ambiguity other than a correlation operation with a steering vector. The base station 110 may identify at least one first candidate AoA based on the first AoA. For example, the at least one first candidate AoA may include the first AoA and a mirror AoA derived according to Equation 5. The base station 110 may identify at least one second candidate AoA based on the second AoA. For example, the at least one second candidate AoA may include the second AoA and a mirror AoA derived according to Equation 8.

The base station 110 may determine the at least one first candidate AoA based on the first AoA. The base station 110 may determine the at least one first candidate AoA based on the first AoA and the first interval (i.e., the interval $d_v$ between antennas in the vertical domain). For example, the base station 110 may determine the at least one first candidate AoA based on the following equation.

【Equation 18】

$$\frac{2\pi}{\lambda_0}d_v \cos\theta_{mirror} = \frac{2\pi}{\lambda_0}d_v \cos\hat{\theta} + 2k\pi$$

$\hat{\theta}$ represents the first AoA (i.e., the first reference AoA) obtained through the correlation operation. $k$ is an integer, and $\theta_{mirror}$ represents a mirror AoA value included in the at least one first candidate AoA. The Equation 18 may be represented by the following equation.

【Equation 19】

$$\theta_{mirror} = \cos^{-1}\left(\cos\hat{\theta} + \frac{\lambda_0}{d_v}k\right)$$

By substituting several integer values into $k$, the base station 110 may identify the at least one first candidate AoA. Meanwhile, since an inverse function of a cosine is defined only when an input variable is in a range [-1, 1], the base station 110 may identify substitutable $k$ values.

In order to derive the $k$ value, if both sides of Equation18 are divided by $2\pi$, it may be represented as follows.

【Equation 20】

$$\frac{d_v}{\lambda_0}\cos\theta_{mirror} = \frac{d_v}{\lambda_0}\cos\hat{\theta} + k$$

Since $\cos\theta_{mirror}$ on a left side of Equation 20 is a value in the range [-1, 1], Equation 20 may be represented by the following equation by substituting -1 or 1 instead of $\cos\theta_{mirror}$.

【Equation 21】

$$-\frac{d_v}{\lambda_0} \leq \frac{d_v}{\lambda_0}\cos\hat{\theta} + k \leq \frac{d_v}{\lambda_0}$$

$$ceil\left[-\frac{d_v}{\lambda_0}\left(1 + \cos\hat{\theta}\right)\right] \leq k \leq floor\left[\frac{d_v}{\lambda_0}\left(1 - \cos\hat{\theta}\right)\right]$$

Since $k$ is an integer, a function ceil x and a function floor y may be used. The ceil x represents the smallest integer among integers greater than or equal to x. The floor y represents the largest integer among integers less than or equal to y.

As described in Equation 18 to Equation 21, the base station 110 may identify the at least one first candidate AoA based on the first AoA and the first interval. The base station 110 may transmit a measurement message including the first AoA and the at least one first candidate AoA to a location management server (e.g., the LMF 230). Meanwhile, a larger number of AoA values than a maximum number of AoA values (e.g., 8) allowed in the measurement message may be obtained. The base station 110 may identify one or more of the derived at least one first candidate AoA. According to an embodiment, the base station 110 may exclude values far from a center angle (e.g., 90 degrees), that is an angle closest to a lower limit angle (e.g., 0 degrees) or an upper limit angle (e.g., 180 degrees) of a search range, from an AoA set.

The first AoA and at least one first candidate AoA to be reported to the location management server 230 may be referred to as a first AoA set. A derivation of the first AoA set may be represented by a pseudo code as illustrated in the table below.

[Table 1]

$$k_{min} = ceil\left[-\frac{d_v}{\lambda_0}\left(1 + \cos\hat{\theta}\right)\right]$$

$$k_{max} = floor\left[\frac{d_v}{\lambda_0}\left(1 - \cos\hat{\theta}\right)\right]$$

$for(k = k_{min}, i = 0; k_{max}; k + +, i + +)$

{

$$\theta_{final(i)} = \cos^{-1}\left(\cos\hat{\theta} + \frac{\lambda_0}{d_v}k\right)$$

}

The base station 110 may determine at least one second candidate AoA based on the second AoA. The base station 110 may determine the at least one second candidate AoA based on the second AoA and the second interval (i.e., the interval $d_h$ between antennas in the horizontal domain). The base station 110 may determine the at least one second candidate AoA based on the first AoA set (i.e., the first AoA and the at least one first candidate AoA), the second AoA, and the second interval. For example, the base station 110 may determine the at least one second candidate AoA based on the following equation.

【Equation 22】

$$\frac{2\pi}{\lambda_0} d_h \sin \hat{\theta} \sin \phi_{mirror} = \frac{2\pi}{\lambda_0} d_h \sin \hat{\theta} \sin \hat{\phi} + 2g\pi$$

$\hat{\theta}$ represents one value included in the first AoA set. $g$ is an integer, and $\phi_{mirror}$ represents a mirror AoA value included in the at least one second candidate AoA. The Equation 22 may be represented by the following equation.

【Equation 23】

$$\phi_{mirror} = \sin^{-1}\left(\sin \hat{\phi} + \frac{\lambda_0}{d_h \sin \hat{\theta}} g\right)$$

By substituting several integer values into $g$, the base station 110 may identify the at least one first candidate AoA. Meanwhile, since an inverse function of a sine is defined only when an input variable is in the range [-1, 1], the base station 110 may identify substitutable $g$ values.

In order to derive the $g$ value, if both sides of Equation18 are divided by $2\pi$, it may be represented as follows.

【Equation 24】

$$\frac{d_h}{\lambda_0} \sin \hat{\theta} \sin \phi_{mirror} = \frac{d_h}{\lambda_0} \sin \hat{\theta} \sin \hat{\phi} + g$$

Since $\sin \phi_{mirror}$ on a left side of Equation 24 is a value in the range [-1, 1], Equation 24 may be represented by the following equation by substituting -1 or 1 instead of $\sin \phi_{mirror}$.

【Equation 25】

$$-\frac{d_h}{\lambda_0} \sin \hat{\theta} \leq \frac{d_h}{\lambda_0} \sin \hat{\theta} \sin \hat{\phi} + g \leq \frac{d_h}{\lambda_0} \sin \hat{\theta}$$

$$ceil\left[-\frac{d_v}{\lambda_0} \sin \hat{\theta} \left(1 + \sin \hat{\phi}\right)\right] \leq g \leq floor\left[\frac{d_v}{\lambda_0} \sin \hat{\theta} \left(1 - \sin \hat{\phi}\right)\right]$$

Since $g$ is an integer, the function ceil x and the function floor y may be used. The ceil x represents the smallest integer among integers greater than or equal to x. The floor y represents the largest integer among integers less than or equal to y.

The second AoA and at least one second candidate AoA to be reported to the location management server 230 may be referred to as a second AoA set. A derivation of the second AoA set may be represented by a pseudo code as illustrated in the table below.

[Table 2]

```
for(i = 0; i < num(θfinal); i + +)
{
    gmin = ceil [−dᵥ/λ₀ sin θfinal(i) (1 + sin φ̂)]

    gmax = floor [dᵥ/λ₀ sin θfinal(i) (1 − sin φ̂)]

    for(g = gmin,j = 0; g ≤ gmax; g + +,j + +)
    {
```

(continued)

$$\phi_{final(i,j)} = \sin^{-1}\left(\sin\hat{\phi} + \frac{\lambda_0}{d_h \sin\theta_{final(i)}}g\right)$$

}

}

The location management server 230 may estimate a location of the terminal 120 based on the first AoA set and the second AoA set. A positioning performance of the location management server 230 may be improved by using a plurality of AoA values including a mirror AOA other than simply using a single AoA value for each specific domain (e.g., the horizontal domain or the vertical domain).

In FIG. 6, it is described that the second AoA set for the horizontal domain is determined after determining the first AoA set for the vertical domain, but embodiments of the present disclosure are not limited thereto. Of course, according to an embodiment, the first AoA set for the vertical domain may be determined after the second AoA set for the horizontal domain is determined. In addition, an order in the sequential estimation method may also be such that a steering vector for the vertical domain may be generated after a steering vector for the horizontal domain is generated.

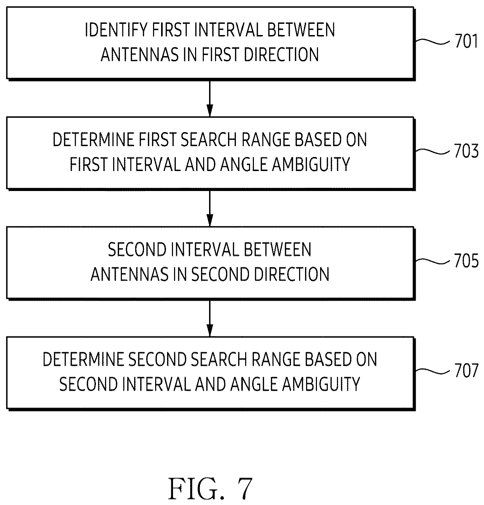

FIG. 7 illustrates an operation flow of an electronic device (e.g., a base station 110) for setting a search range.

Referring to FIG. 7, in operation 701, the base station 110 may identify a first interval between antennas in a first direction. For example, the first direction means one of two directions perpendicular to each other of a two-dimensional antenna array of the base station 110. A direction perpendicular to the first direction corresponds to a second direction. For example, the first direction may include a direction of a vertical domain corresponding to the y-axis of FIG. 4B (for another example, the z-axis of FIG. 4C). The base station 110 may identify an interval (e.g., $d_v$) between antennas on a vertical domain.

In operation 703, the base station 110 may determine a first search range based on the first interval and angle ambiguity. The base station 110 may determine the first search range based on whether the first interval is greater than a length of a half wavelength of a received signal. For example, in a case that the first interval is shorter than or equal to the length of the half wavelength, the base station 110 may determine the first search range as an entire range (e.g., 0 degrees to 180 degrees) in which the first search range may be searched in the vertical domain. In a case that the first interval is longer than the length of the half wavelength, the base station 110 may determine a range of an upper limit and a lower limit determined based on the first interval and a length of a wavelength as the first search range. For example, a sum of the upper limit and the lower limit may be 180 degrees. As an example, the first search range may be determined based on the Equation 7.

In operation 705, the base station 110 may identify a second interval between antennas in a second direction. For example, the second direction means one of the two directions perpendicular to each other of the two-dimensional antenna array of the base station 110. For example, the second direction may include a direction of a horizontal domain corresponding to the x-axis of FIG. 4B (for another example, the y-axis of FIG. 4C). The base station 110 may identify an interval (e.g., $d_h$) between antennas on the horizontal domain.

In operation 707, the base station 110 may determine a second search range based on the second interval and the angle ambiguity. The base station 110 may determine the second search range based on whether the first interval is greater than the length of the half wavelength of the received signal. According to an embodiment, the base station 110 may determine the second search range based on a first AoA estimated in the first search range. The base station 110 may determine the second search range based on the first interval, the second interval, and the length of the wavelength. According to another embodiment, the base station 110 may determine the second search range independently of the first AoA. The base station 110 may determine the second search range based on the second interval and the length of the wavelength without the first interval.

The operations by the base station 110 are described in FIG. 7, but embodiments of the present disclosure are not limited thereto. In a distributed deployment scenario, the operations of the base station 110 may be separated into operations of a DU 210 and operations of an RU 220.

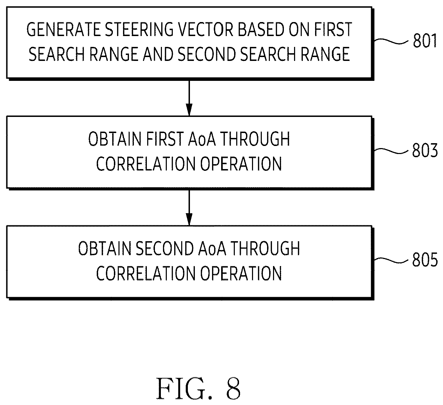

FIG. 8 illustrates an operation flow of an electronic device (e.g., a base station 110) for obtaining an AoA.

Referring to FIG. 8, in operation 801, the base station 110 may generate a steering vector based on a first search range and a second search range. According to an embodiment, the base station 110 may generate a steering vector for each of two directions. For example, the base station 110 may generate a first steering vector for a first direction (e.g., a direction of a vertical domain, the (+) y-axis direction of FIG. 4B, the (+) z-axis direction of FIG. 4C ) and a second steering vector for a second direction (e.g., a direction of a horizontal domain, the (+) x-axis direction of FIG. 4B, the (+) y-axis direction of FIG. 4C ). The second steering vector may be determined based on the first AoA. As an example, Equation 13 may be referenced for the first steering vector, and the second steering vector. According to another embodiment, the base station 110 may generate a joint steering vector for both of the two directions. For example, the base station 110 may generate a joint steering vector for simultaneous estimation in the first direction and the second direction. As an example, Equation 14 may be referenced for the joint steering vector.

In operation 803, the base station 110 may obtain the first AoA through a correlation operation. According to an embodiment, the base station 110 may obtain the first AoA based on a correlation operation for the first steering vector. According to another embodiment, the base station 110 may determine a candidate combination of the first AoA and a second AoA based on a correlation operation for the joint steering vector. The base station 110 may obtain the first AoA from the candidate combination.

In operation 805, the base station 110 may obtain the second AoA through a correlation operation. According to an embodiment, the base station 110 may obtain the second AoA based on a correlation operation for the second steering vector. According to another embodiment, the base station 110 may determine the candidate combination of the first AoA and the second AoA based on the correlation operation for the joint steering vector. The base station 110 may obtain the second AoA from the candidate combination.

The operations by the base station 110 are described in FIG. 8, but embodiments of the present disclosure are not limited thereto. In a distributed deployment scenario, the operations of the base station 110 may be separated into operations of a DU 210 and operations of an RU 220.

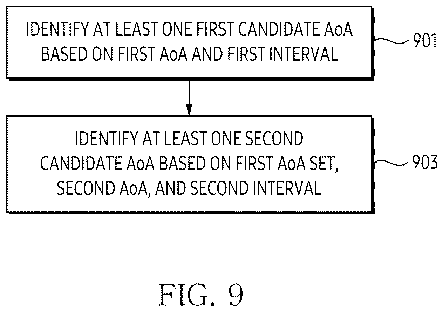

FIG. 9 illustrates an operation flow of an electronic device (e.g., a base station 110) for identifying a candidate AoA.

Referring to FIG. 9, in operation 901, the base station 110 may identify at least one first candidate AoA based on a first AoA and a first interval. The base station 110 may identify at least one value in a mirror AoA relationship with the first AoA. Herein, the mirror AoA relationship means a relationship between values that actual angle differences are different despite having the same phase difference according to a periodic characteristic (e.g., a period of $2\pi$) of a sinusoidal wave. Instead of performing a correlation operation on each of possible candidate values in a first possible direction, the base station 110 may identify a first candidate AoA value in the mirror AoA relationship based on a specified operation based on the first AoA. For example, in order to identify a first candidate AoA, Equation 18 may be referenced.

In operation 903, the base station 110 may identify at least one second candidate AoA based on a first AoA set, a second AoA, and a second interval. The base station 110 may identify at least one value in the mirror AoA relationship with the second AoA. Instead of performing a correlation operation on each of possible candidate values in a second possible direction, the base station 110 may identify a second candidate AoA value in the mirror AoA relationship based on a specified operation based on the first AoA set and the second AoA. For example, in order to identify a second candidate AoA, Equation 22 may be referenced.

The operations by the base station 110 are described in FIG. 9, but embodiments of the present disclosure are not limited thereto. In a distributed deployment scenario, the operations of the base station 110 may be separated into operations of a DU 210 and operations of an RU 220.

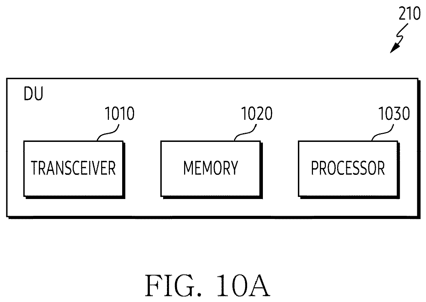

FIG. 10A illustrates an example of components of a DU (e.g., a DU 210). The components of FIG. 10A may be understood as a configuration of the DU 210 of FIG. 10A as a portion of a base station (e.g., a base station 110). A term such as '...unit', '...device', and the like, used hereinafter may mean a unit that processes at least one function or operation, which may be implemented as hardware or software or a combination of the hardware and the software.

Referring to FIG. 10A, the DU 210 includes a transceiver 1010, memory 1020, and a processor 1030.

The transceiver 1010 may perform functions for transmitting and receiving a signal in a wired communication environment. The transceiver 1010 may include a wired interface for controlling a direct connection between a device and a device through a transmission medium (e.g., a copper wire and an optical fiber). For example, the transceiver 1010 may transmit an electrical signal to another device through the copper wire or may perform conversion between an electrical signal and an optical signal. The DU 210 may perform communication with a radio unit (RU) through the transceiver 1010.

The transceiver 1010 may also perform the functions for transmitting and receiving the signal in a wireless communication environment. For example, the transceiver 1010 may perform a conversion function between a baseband signal and a bit string according to a physical layer standard of a system. For example, when transmitting data, the transceiver 1010 generates complex symbols by encoding and modulating a transmission bit string. In addition, when receiving data, the transceiver 1010 restores a reception bit string by demodulating and decoding the baseband signal. In addition, the transceiver 1010 may include a plurality of transmission/reception paths.

The transceiver 1010 may transmit and receive a signal. For example, the transceiver 1010 may transmit a management plane (M-plane) message. For example, the transceiver 1010 may transmit a management plane (S-plane) message. For example, the transceiver 1010 may transmit a control plane (C-plane) message. For example, the transceiver 1010 may transmit a user plane (U-plane) message. For example, the transceiver 1010 may receive the user plane message. Although only the transceiver 1010 is illustrated in FIG. 10A, according to another implementation example, the DU 210 may include two or more transceivers.

The transceiver 1010 transmits and receives the signal as described above. Accordingly, all or a portion of the transceiver 1010 may be referred to as a 'communication unit', a 'transmission unit', a 'reception unit', or a 'transmission/reception unit'. In addition, in the following description, transmission and reception performed through a wireless channel are used to mean that includes processing performed by the transceiver 1010 as described above.

Although not illustrated in FIG. 10A, the transceiver 1010 may further include a backhaul transceiver to be connected with a core network or another base station. The backhaul transceiver may provide an interface for performing communication with other nodes in a network. In other words, the backhaul transceiver converts a bit string transmitted from a base station to another node, for example, which is as another access node, another base station, an upper node, a core network, and the like, into a physical signal, and converts the physical signal received from the other node into a bit string.

The memory 1020 stores data such as a basic program, an application program, setting information, and the like for an operation of the DU 210. The memory 1020 may be referred to as a storage unit. The memory 1020 may be configured with volatile memory, non-volatile memory, or a combination of volatile memory and nonvolatile memory. In addition, the memory 1020 may provide data stored according to a request of the processor 1030.

The processor 1030 controls overall operations of the DU 210. The processor 1080 may be referred to as a control unit. For example, the processor 1030 transmits and receives a signal through the transceiver 1010 (or through a backhaul communication unit). In addition, the processor 1030 records and reads data in the memory 1020. In addition, the processor 1030 may perform functions of a protocol stack required by a communication standard. Although only the processor 1030 is illustrated in FIG. 10A, according to another implementation example, the DU 210 may include two or more processors.

A configuration of the DU 210 illustrated in FIG. 10A is only an example, and an example of the DU performing embodiments of the present disclosure is not limited from a configuration illustrated in FIG. 10A. In partial embodiments, a partial configuration may be added, deleted, or changed.

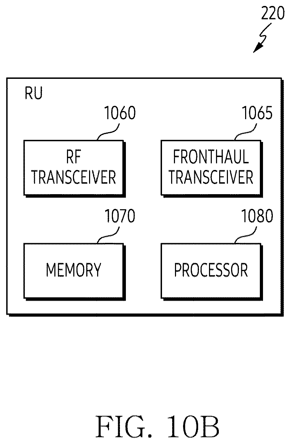

FIG. 10B illustrates an example of components of an RU (e.g., an RU 220). The components of FIG. 10B may be understood as a configuration of the RU 220 of FIG. 10B as a portion of a base station (e.g., a base station 110). A term such as '...unit', '...device', and the like, used hereinafter may mean a unit that processes at least one function or operation, which may be implemented as hardware or software or a combination of hardware and software.

Referring to FIG. 10B, the RU 220 includes an RF transceiver 1060, a fronthaul transceiver 1065, memory 1070, and a processor 1080.

The RF transceiver 1060 performs functions for transmitting and receiving a signal through a wireless channel. For example, the RF transceiver 1060, after up-converting a baseband signal into an RF band signal, transmits it through an antenna, and down-converts the RF band signal received through the antenna into the baseband signal. For example, the RF transceiver 1060 may include a transmission filter, a reception filter, an amplifier, a mixer, an oscillator, a DAC, an ADC, and the like.

The RF transceiver 1060 may include a plurality of transmission/reception paths. Furthermore, the RF transceiver 1060 may include an antenna unit. The RF transceiver 1060 may include at least one antenna array configured with a plurality of antenna elements. In terms of hardware, the RF transceiver 1060 may be configured with digital circuitry and analog circuitry (e.g., a radio frequency integrated circuit (an RFIC)). Herein, the digital circuitry and the analog circuitry may be implemented as one package. Also, the RF transceiver 1060 may include a plurality of RF chains. The RF transceiver 1060 may perform beamforming. The RF transceiver 1060 may apply a beamforming weight to a signal to be transmitted/received in order to give a direction according to a setting of the processor 1080. According to an embodiment, the RF transceiver 1060 may include a plurality of antennas.

According to an embodiment, the RF transceiver 1060 may transmit and receive a signal on a radio access network. For example, the RF transceiver 1060 may transmit a downlink signal. The downlink signal may include a synchronization signal (SS), a reference signal (RS) (e.g., a cell-specific reference signal (CRS), a demodulation (DM)-RS), system information (e.g., MIB, SIB, remaining system information (RMSI), other system information (OSI)), a configuration message, control information, or downlink data, and the like. In addition, for example, the RF transceiver 1060 may receive an uplink signal. For example, the uplink signal may include an SRS or a DM-RS. According to an embodiment, the RF transceiver 1060 may receive SRSs through the plurality of antennas included in the RF transceiver 1060. Only the RF transceiver 1060 is illustrated in FIG. 10B, but according to another implementation example, the RU 220 may include two or more RF transceivers.

The fronthaul transceiver 1065 may transmit and receive a signal. According to an embodiment, the fronthaul transceiver 1065 may transmit and receive the signal on a fronthaul interface. For example, the fronthaul transceiver 1065 may receive a management plane (M-plane) message. For example, the fronthaul transceiver 1065 may receive a management plane (S-plane) message. For example, the fronthaul transceiver 1065 may receive a control plane (C-plane) message. For example, the fronthaul transceiver 1065 may transmit a user plane (U-plane) message. For example, the fronthaul transceiver 1065 may receive a user plane message. Only the fronthaul transceiver 1065 is illustrated in FIG. 10B, but according to another implementation example, the RU 220 may include two or more fronthaul transceivers.

The RF transceiver 1060 and the fronthaul transceiver 1065 transmit and receive the signal as described above. Accordingly, all or a portion of the RF transceiver 1060 and the fronthaul transceiver 1065 may be referred to as a 'communication unit', a 'transmission unit', a 'reception unit', or a 'transmission/reception unit'. In addition, in the following description, transmission and reception performed through a wireless channel are used to mean that includes processing performed by the RF transceiver 1060 as described above. In the following description, transmission and reception performed through the wireless channel are used to mean that includes processing performed by the RF transceiver 1060 as described above.

The memory 1070 stores data such as a basic program, an application program, setting information, and the like for an operation of the RU 220. The memory 1070 may be referred to as a storage unit. The memory 1070 may be configured with volatile memory, non-volatile memory, or a combination of volatile memory and nonvolatile memory. In addition, the memory 1070 provides data stored according to a request of the processor 1080.

The processor 1080 controls overall operations of the RU 220. The processor 1080 may be referred to as a control unit. For example, the processor 1080 transmits and receives a signal through the RF transceiver 1060 or the fronthaul transceiver 1065. In addition, the processor 1080 records and reads data in the memory 1070. In addition, the processor 1080 may perform functions of a protocol stack required by a communication standard. Although only the processor 1080 is illustrated in FIG. 10B, according to another implementation example, the RU 220 may include two or more processors. The processor 1080, which is an instruction set or a code, stored in the memory 1070, may be a storage space in which instruction/code at least temporarily resided in the processor 1080 or instruction/code is stored, or may be a portion of circuitry configuring the processor 1080. In addition, the processor 1080 may include various modules for performing communication. The processor 1080 may control the RU 220 to perform operations according to embodiments to be described below.

A configuration of the RU 220 illustrated in FIG. 10B is only an example, and an example of the RU performing embodiments of the present disclosure is not limited from a configuration illustrated in FIG. 10B. In partial embodiments, a partial configuration may be added, deleted, or changed.

In the present disclosure, a technique for more accurately estimating an AoA by limiting a search range so that angular ambiguity does not occur based on an interval between antennas of an antenna array, that is arrangement information, has been described. By accurately indicating whether a high correlation is a signal by another terminal or due to a mirror AoA according to a periodic characteristic of a sinusoidal wave, a location management server (i.e., an LMF) that collects AoAs may provide a high positioning performance. Furthermore, implementation complexity of an AoA estimation apparatus may be reduced by using a theoretical principle according to the characteristic of the sinusoidal wave other than performing a correlation operation on each of candidate angles to derive the mirror AoA. In a case that the interval between antennas is greater than a length of a half wavelength of a signal, the AoA estimation apparatus (e.g., a base station 110 or a DU 210) according to embodiments of the present disclosure may estimate candidate AoAs (i.e., including possible mirror AoAs) with low complexity. Without installing a separate AoA estimation antenna, the AoA estimation apparatus may increase estimation accuracy of an AoA through an operation in a modem using multiple antennas.

The effects that may be obtained from the present disclosure are not limited to those described above, and any other effects not mentioned herein will be clearly understood by those having ordinary knowledge in the art to which the present disclosure belongs, from the following description.

According to embodiments of the present disclosure, by identifying that AoA values (e.g., multiple UL-AOA values corresponding to multiple UL-AOA IEs on a 3GPP standard) reported to a location management server 230 satisfy a specified condition (e.g., Equation 18 or Equation 22) and that an interval between antennas of a large access network node is greater than a half wavelength, a performance of an operation according to embodiments of the present disclosure may be confirmed.

According to embodiments, an apparatus of a base station is provided. The apparatus may include at least one transceiver and at least one processor. The at least one processor may be configured to obtain signals received from a terminal through a plurality of antennas. The at least one processor may be configured to obtain a first angle of arrival (AoA) for a first direction of the plurality of antennas based on the signals. The at least one processor may be configured to transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

For example, the at least one processor may be configured to obtain a second AoA for a second direction of the plurality of antennas based on the signals. The measurement message may include the second AoA and at least one second candidate AoA associated with the second AoA. The at least one second candidate AoA may be identified based on the second AoA and a second interval between antennas disposed along the second direction among the plurality of antennas.

For example, the first AoA may be obtained within a first search range determined based on the first interval for the first direction. The second AoA may be obtained within a second search range determined based on the second interval for the second direction.

For example, the first search range may be between a first value and a second value in a case that the first interval is greater than 1/2 of a wavelength of the signals. The first value may be determined based on the wavelength and the first interval. The second value may be a value obtained by subtracting the first value from 180 degrees or $\pi$ radian.

For example, the first value may be determined as $\cos^{-1}\left(\frac{\lambda_0}{2d_v}\right)$, $\lambda_0$ may represent the wavelength, and $d_v$ may represent the first interval.

For example, the second search range may be between a third value and a fourth value in a case that a component of the second interval according to the first AoA is greater than 1/2 of the wavelength of the signals. The third value may be determined based on the wavelength, the first interval, and the first AoA. The fourth value may have the same magnitude as the third value and an opposite sign.

For example, the third value may be $-\sin^{-1}\left(\frac{\lambda_0}{2d_h \sin \theta_n}\right)$, $\lambda_0$ may represent the wavelength, $d_h$ may represent the second interval, and $\theta_n$ may represent the first AoA.

For example, the second search range may be between a third value and a fourth value in a case that the first interval is greater than 1/2 of the wavelength of the signals and the second interval is greater than 1/2 of the wavelength of the signals. The third value may be determined based on the wavelength, the first interval, the second interval, and the first AoA. The fourth value may have the same magnitude as the third value and an opposite sign.

For example, the third value may be $-\sin^{-1}\left(\min\left[\frac{\lambda_0}{2d_h \sin\left(\cos^{-1}\left(\frac{\lambda_0}{2d_v}\right)\right)},1\right]\right)$, $\lambda_0$ may represent the wavelength, $d_v$ may represent the first interval, and $d_h$ may represent the second interval.

For example, the first AoA may be identified among first values in the first search range based on a correlation operation using the signals. The second AoA may be identified among second values in the second search range based on the correlation operation using the signals.

For example, a difference between a cosine value of the first AoA and a cosine value of a first candidate AoA among the at least one first candidate AoA may be a multiple of a ratio of the wavelength of the signals to the first interval.

For example, the first candidate AoA may be identified based on the following equation.

【Equation 26】

$$\theta_{mirror} = \cos^{-1}\left(\cos\hat{\theta} + \frac{\lambda_0}{d_v}k\right)$$

For example, $\theta_{mirror}$ may represent the first candidate AoA, $\lambda_0$ may represent the wavelength, $d_v$ may represent the first interval, $\hat{\theta}$ may represent the first AoA, and k may satisfy the following range.

【Equation 27】

$$ceil\left[-\frac{d_v}{\lambda_0}(1+\cos\hat{\theta})\right] \le k \le floor\left[\frac{d_v}{\lambda_0}(1-\cos\hat{\theta})\right]$$

For example, a difference between a sine value of the second AoA and a sine value of a second candidate AoA among the at least one second candidate AoA may be a multiple of a ratio of the wavelength of the signals to a component of the second interval according to the first AoA.

For example, the second candidate AoA may be identified based on the following equation.

【Equation 28】

$$\phi_{mirror} = \sin^{-1}\left(\sin\hat{\phi} + \frac{\lambda_0}{d_h \sin\hat{\theta}}g\right)$$

For example, $\theta_{mirror}$ may represent the second candidate AoA, $\lambda_0$ may represent the wavelength, $d_h$ may represent the second interval, $\hat{\theta}$ may represent one of the first AoA and the at least one first candidate AoA, $\hat{\phi}$ may represent the second AoA. g may be an integer satisfying the following range.

【Equation 28】

$$ceil\left[-\frac{d_v}{\lambda_0}\sin\hat{\theta}\left(1+\sin\hat{\phi}\right)\right] \leq g \leq floor\left[\frac{d_v}{\lambda_0}\sin\hat{\theta}\left(1-\sin\hat{\phi}\right)\right]$$

For example, the first AoA and the at least one first candidate AoA may include zenith AoAs for the signals. The second AoA and the at least one second candidate AoA may include azimuth AoAs for the signals. The signals may include sounding reference signals (SRSs). The plurality of antennas may correspond to antenna elements of a two-dimensional (2D) array antenna configured based on the first direction and the second direction.

For example, the apparatus may include a digital unit (DU). The plurality of antennas may be associated with a radio unit (RU) connected to the DU through a fronthaul interface. The signals may be obtained through the fronthaul interface.

According to embodiments, a method performed by an apparatus of a base station is provided. The method may include obtaining signals received through a plurality of antennas. The method may include obtaining a first angle of arrival (AoA) for a first direction of the plurality of antennas based on the signals. The method may include transmitting, to a location management server, a measurement message including the first AoA and at least one first candidate AoA associated with the first AoA. In the method, the at least one first candidate AoA may be identified based on the first AoA and a first interval between antennas disposed along the first direction.

For example, the method may include obtaining a second AoA for a second direction of the plurality of antennas based on the signals. The measurement message may include the second AoA and at least one second candidate AoA associated with the second AoA. The at least one second candidate AoA may be identified based on the second AoA and a second interval between antennas disposed along the second direction among the plurality of antennas.

For example, the first AoA may be obtained within a first search range determined based on the first interval for the first direction. The second AoA may be obtained within a second search range determined based on the second interval for the second direction.

For example, a difference between a cosine value of the first AoA and a cosine value of a first candidate AoA among the at least one first candidate AoA may be a multiple of a ratio of the wavelength of the signals to the first interval. A difference between a sine value of the second AoA and a sine value of a second candidate AoA among the at least one second candidate AoA may be a multiple of a ratio of the wavelength of the signals to a component of the second interval according to the first AoA.

In embodiments, an apparatus of a base station may be provided. The apparatus may include memory storing instructions, at least one transceiver, and at least one processor. The instructions, when executed by the at least one processor, may cause the apparatus to obtain signals received from a terminal through a plurality of antennas, obtain a first angle of arrival (AoA) for a first direction of the plurality of antennas based on the signals, and transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

For example, the instructions, when executed by the at least one processor, may cause the apparatus to obtain a second AoA for a second direction of the plurality of antennas based on the signals, and the measurement message may include the second AoA and at least one second candidate AoA associated with the second AoA. The at least one second candidate AoA may be identified based on the second AoA and a second interval between antennas disposed along the second direction among the plurality of antennas.

In embodiments, a digital unit (DU) may be provided. The DU may include memory storing instructions, at least one transceiver, and at least one processor. The instructions, when executed by the at least one processor, may cause the DU to obtain signals received from a terminal through a plurality of antennas of a radio unit (RU), obtain a first angle of arrival (AoA) for a first direction of the plurality of antennas based on the signals, and transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

In embodiments, a radio unit (RU) may be provided. The RU may include memory storing instructions, at least one transceiver, and at least one processor. The instructions, when executed by the at least one processor, may cause the RU to obtain signals received from a terminal through a plurality of antennas, obtain a first angle of arrival (AoA) for a first direction of the plurality of antennas based on the signals, and transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

In embodiments, a non-transitory computer readable storage medium is provided. The the non-transitory computer readable storage medium, when executed by a processor of an apparatus, may cause the apparatus to obtain signals received from a terminal through a plurality of antennas, obtain a first angle of arrival (AoA) for a first direction of the plurality of antennas based on the signals, and transmit, to a location management server through the at least one transceiver, a measurement message including the first AoA and at least one first candidate AoA associated with the first AoA. The at least one first candidate AoA may be identified based on the first AoA and a first interval between antennas disposed along the first direction.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software including one or more instructions that are stored in a storage medium that is readable by a machine. For example, a processor of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage

**EP 4 661 531 A1**

area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

**Claims**

1. An apparatus of a base station, comprising:

   memory storing instructions;
   at least one transceiver; and
   at least one processor,
   wherein the instructions, when executed by the at least one processor, cause the apparatus to:

      obtain signals received from a terminal through a plurality of antennas,
      obtain a first angle of arrival (AoA) for a first direction of the plurality of antennas based on the signals, and
      transmit, to a location management server through the at least one transceiver, a measurement message including the first AoA and at least one first candidate AoA associated with the first AoA, and
      wherein the at least one first candidate AoA is identified based on the first AoA and a first interval between antennas disposed along the first direction.

2. The apparatus of claim 1,
   wherein the instructions, when executed by the at least one processor, cause the apparatus to:

      obtain a second AoA for a second direction of the plurality of antennas based on the signals,
      wherein the measurement message further includes the second AoA and at least one second candidate AoA associated with the second AoA, and
      wherein the at least one second candidate AoA is identified based on the second AoA and a second interval between antennas disposed along the second direction among the plurality of antennas.

3. The apparatus of claim 2,

      wherein the first AoA is obtained within a first search range determined based on the first interval for the first direction, and
      wherein the second AoA is obtained within a second search range determined based on the second interval for the second direction.

4. The apparatus of claim 3,

      wherein the first search range is between a first value and a second value in a case that the first interval is greater than 1/2 of a wavelength of the signals,
      wherein the first value is determined based on the wavelength and the first interval, and
      wherein the second value is a value obtained by subtracting the first value from 180 degrees or $\pi$ radian.

5. The apparatus of claim 4,

   wherein the first value is determined as $\cos^{-1}\left(\frac{\lambda_0}{2d_v}\right)$ ,

   wherein $\lambda_0$ represents the wavelength, and $d_v$ represents the first interval.

6. The apparatus of claim 3,

   wherein the second search range is between a third value and a fourth value in a case that a component of the second interval according to the first AoA is greater than 1/2 of the wavelength of the signals,
   wherein the third value is determined based on the wavelength, the second interval, and the first AoA, and
   wherein the fourth value has the same magnitude as the third value and an opposite sign.

7. The apparatus of claim 6,

   wherein the third value is $-\sin^{-1}\left(\frac{\lambda_0}{2d_h \sin\theta_n}\right)$ ,

   wherein $\lambda_0$ represents the wavelength, $d_h$ represents the second interval, and $\theta_n$ represents the first AoA.

8. The apparatus of claim 3,

   wherein the second search range is between a third value and a fourth value in a case that the first interval is greater than 1/2 of the wavelength of the signals and the second interval is greater than 1/2 of the wavelength of the signals,
   wherein the third value is determined based on the wavelength, the first interval, and the second interval, and
   wherein the fourth value has the same magnitude as the third value and an opposite sign.

9. The apparatus of claim 8,

   wherein the third value is

   $$-\sin^{-1}\left(\min\left[\frac{\lambda_0}{2d_h \sin\left(\cos^{-1}\left(\frac{\lambda_0}{2d_v}\right)\right)}, 1\right]\right)$$

   wherein $\lambda_0$ represents the wavelength, $d_v$ represents the first interval, and $d_h$ represents the second interval.

10. The apparatus of claim 3,

    wherein the first AoA is identified among first values in the first search range based on a correlation operation using the signals, and
    wherein the second AoA is identified among second values in the second search range based on the correlation operation using the signals.

11. The apparatus of claim 1,
    wherein a difference between a cosine value of the first AoA and a cosine value of a first candidate AoA among the at least one first candidate AoA is a multiple of a ratio of the wavelength of the signals to the first interval.

12. The apparatus of claim 11,

    wherein the first candidate AoA is identified based on the following equation:

    $$\theta_{mirror} = \cos^{-1}\left(\cos\hat{\theta} + \frac{\lambda_0}{d_v}k\right)$$
    ,

    wherein $\theta_{mirror}$ represents the first candidate AoA, $\lambda_0$ represents the wavelength, $d_v$ represents the first interval, $\hat{\theta}$ represents the first AoA, and k is an integer satisfying the following range,

$$ceil\left[-\frac{d_v}{\lambda_0}(1+\cos\hat\theta)\right] \le k \le floor\left[\frac{d_v}{\lambda_0}(1-\cos\hat\theta)\right].$$

13. The apparatus of claim 2,
wherein a difference between a sine value of the second AoA and a sine value of a second candidate AoA among the at least one second candidate AoA is a multiple of a ratio of the wavelength of the signals to a component of the second interval according to the first AoA.

14. The apparatus of claim 13,

wherein the second candidate AoA is identified based on the following equation:

$$ceil\left[-\frac{d_v}{\lambda_0}(1+\cos\hat\theta)\right] \le k \le floor\left[\frac{d_v}{\lambda_0}(1-\cos\hat\theta)\right]$$

wherein $\theta_{mirror}$ represents the second candidate AoA, $\lambda_0$ represents the wavelength, $d_h$ represents the second interval, $\hat\theta$ represents one of the first AoA and the at least one first candidate AoA, $\hat\phi$ represents the second AoA, and $g$ is an integer satisfying the following range,

$$ceil\left[-\frac{d_v}{\lambda_0}\sin\hat\theta(1+\sin\hat\phi)\right] \le g \le floor\left[\frac{d_v}{\lambda_0}\sin\hat\theta(1-\sin\hat\phi)\right].$$

15. A method performed by an apparatus of a base station, comprising:

obtaining signals received through a plurality of antennas;
obtaining a first angle of arrival (AoA) for a first direction of the plurality of antennas based on the signals; and
transmitting, to a location management server, a measurement message including the first AoA and at least one first candidate AoA associated with the first AoA, and
wherein the at least one first candidate AoA is identified based on the first AoA and a first interval between antennas disposed along the first direction.

FIG. 1

FIG. 2

110

NG-RAN node

230

LMF

MEASUREMENT REQUEST 311

MEASUREMENT RESPONSE 313

FIG. 3A

110

NG-RAN node

230

LMF

MEASUREMENT REPORT                    321

FIG. 3B

FIG. 4A

Index = (v, h, pole)

450

+45 pole:(3, 0, 0)
-45 pole:(3, 0, 1)

+45 pole:(3, 7, 0)
-45 pole:(3, 7, 1)

$d_v$ ~453

+45 pole:(2, 0, 0)
-45 pole:(2, 0, 1)

$d_h$

451

+45 pole:(1, 0, 0)
-45 pole:(1, 0, 1)

+45 pole:(0, 0, 0)   +45 pole:(0, 1, 0)   +45 pole:(0, 2, 0)
-45 pole:(0, 0, 1)   -45 pole:(0, 1, 1)   -45 pole:(0, 2, 1)

+45 pole:(0, 7, 0)
-45 pole:(0, 7, 1)

y

x

FIG. 4B

FIG. 4C

FIG. 5

SEARCH RANGE
SETTING
601

AoA
OBTAINMENT
603

CANDIDATE AoA
IDENTIFICATION
605

FIG. 6

```
┌─────────────────────────────────────┐
│     IDENTIFY FIRST INTERVAL BETWEEN  │
│      ANTENNAS IN FIRST DIRECTION     │──── 701
└─────────────────────────────────────┘
                  │
                  ▼
┌─────────────────────────────────────┐
│  DETERMINE FIRST SEARCH RANGE BASED ON │
│   FIRST INTERVAL AND ANGLE AMBIGUITY │──── 703
└─────────────────────────────────────┘
                  │
                  ▼
┌─────────────────────────────────────┐
│        SECOND INTERVAL BETWEEN       │
│     ANTENNAS IN SECOND DIRECTION     │──── 705
└─────────────────────────────────────┘
                  │
                  ▼
┌─────────────────────────────────────┐
│ DETERMINE SECOND SEARCH RANGE BASED ON │
│  SECOND INTERVAL AND ANGLE AMBIGUITY │──── 707
└─────────────────────────────────────┘
```

FIG. 7

GENERATE STEERING VECTOR BASED ON FIRST
SEARCH RANGE AND SECOND SEARCH RANGE — 801

OBTAIN FIRST AoA THROUGH
CORRELATION OPERATION — 803

OBTAIN SECOND AoA THROUGH
CORRELATION OPERATION — 805

FIG. 8

IDENTIFY AT LEAST ONE FIRST CANDIDATE AoA BASED ON FIRST AoA AND FIRST INTERVAL ∼901

IDENTIFY AT LEAST ONE SECOND CANDIDATE AoA BASED ON FIRST AoA SET, SECOND AoA, AND SECOND INTERVAL ∼903

FIG. 9

210

DU

| 1010 | 1020 | 1030 |
| TRANSCEIVER | MEMORY | PROCESSOR |

FIG. 10A

220

RU

1060

RF
TRANSCEIVER

1065

FRONTHAUL
TRANSCEIVER

1070

MEMORY

1080

PROCESSOR

FIG. 10B

## INTERNATIONAL SEARCH REPORT

| International application No. |
|---|
| **PCT/KR2024/000996** |

| A. | CLASSIFICATION OF SUBJECT MATTER |
|---|---|

**H04W 64/00**(2009.01)i; **H04W 24/08**(2009.01)i; **G01S 5/04**(2006.01)i; **G01S 3/14**(2006.01)i; **G01S 5/02**(2010.01)i

According to International Patent Classification (IPC) or to both national classification and IPC

| B. | FIELDS SEARCHED |
|---|---|

Minimum documentation searched (classification system followed by classification symbols)

H04W 64/00(2009.01); G01S 3/16(2006.01); G01S 5/00(2006.01); G01S 5/02(2010.01); H04W 4/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: AoA(angle of arrival), 모호성(ambiguity), 안테나(antenna), 방향(direction), 위치 관리 서버(location management server), 파장(wavelength)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2014-0104903 A (PUSAN NATIONAL UNIVERSITY INDUSTRY-UNIVERSITY COOPERATION FOUNDATION) 29 August 2014 (2014-08-29) See paragraphs [0094]-[0095]; and claims 1-2. | 1-3,15 |
| A | | 4-14 |
| Y | WO 2022-082150 A1 (QUALCOMM INCORPORATED) 21 April 2022 (2022-04-21) See claims 21-22; and figure 5. | 1-3,15 |
| A | ZUO, Le et al. Accurate 2-D AOA Estimation and Ambiguity Resolution for a Single Source under Fixed Uniform Circular Arrays. Volume 2017, Article ID 9489318, 12 December 2017. See sections 1-3. | 1-15 |
| A | KR 10-2014-0009480 A (QUALCOMM INCORPORATED) 22 January 2014 (2014-01-22) See paragraphs [0038]-[0053]; and figure 2. | 1-15 |
| A | WO 2022-192873 A1 (QUALCOMM INCORPORATED) 15 September 2022 (2022-09-15) See paragraphs [0078]-[0098]; and figure 8. | 1-15 |

☐ Further documents are listed in the continuation of Box C.    ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **07 May 2024** | **07 May 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000996**

| Patent document cited in search report | | | Publication date (day/month/year) | Patent family member(s) | | | Publication date (day/month/year) |
|---|---|---|---|---|---|---|---|
| KR | 10-2014-0104903 | A | 29 August 2014 | None | | | |
| WO | 2022-082150 | A1 | 21 April 2022 | BR | 112023006219 | A2 | 09 May 2023 |
| | | | | CN | 116349323 | A | 27 June 2023 |
| | | | | EP | 4226700 | A1 | 16 August 2023 |
| | | | | KR | 10-2023-0087460 | A | 16 June 2023 |
| | | | | US | 2023-0266429 | A1 | 24 August 2023 |
| KR | 10-2014-0009480 | A | 22 January 2014 | CN | 103597861 | A | 19 February 2014 |
| | | | | CN | 103597861 | B | 16 January 2018 |
| | | | | EP | 2697986 | A1 | 19 February 2014 |
| | | | | EP | 2697986 | B1 | 03 November 2021 |
| | | | | EP | 3944643 | A1 | 26 January 2022 |
| | | | | ES | 2898618 | T3 | 08 March 2022 |
| | | | | JP | 2014-515233 | A | 26 June 2014 |
| | | | | JP | 2016-035469 | A | 17 March 2016 |
| | | | | JP | 6009537 | B2 | 19 October 2016 |
| | | | | JP | 6449124 | B2 | 09 January 2019 |
| | | | | US | 2012-0258733 | A1 | 11 October 2012 |
| | | | | US | 9602990 | B2 | 21 March 2017 |
| | | | | WO | 2012-142034 | A1 | 18 October 2012 |
| WO | 2022-192873 | A1 | 15 September 2022 | BR | 112023017611 | A2 | 23 January 2024 |
| | | | | CN | 116917758 | A | 20 October 2023 |
| | | | | EP | 4305443 | A1 | 17 January 2024 |
| | | | | JP | 2024-509409 | A | 01 March 2024 |
| | | | | KR | 10-2023-0156321 | A | 14 November 2023 |
| | | | | TW | 202241155 | A | 16 October 2022 |
| | | | | US | 2024-0085517 | A1 | 14 March 2024 |

Form PCT/ISA/210 (patent family annex) (July 2022)